(19) Europäisches Patentamt / European Patent Office / Office européen des brevets

(11) **EP 0 962 806 B1**

(12) **EUROPEAN PATENT SPECIFICATION**

(45) Date of publication and mention
of the grant of the patent:
**03.12.2008 Bulletin 2008/49**

(51) Int Cl.:
*G02F 1/1335* (2006.01)   *G02B 5/30* (2006.01)
*B32B 27/36* (2006.01)   *B32B 7/02* (2006.01)

(21) Application number: **99116989.7**

(22) Date of filing: **20.12.1994**

(54) **Multilayered optical film**

Mehrschichtiger optischer Film

Film optique multicouche

(84) Designated Contracting States:
**DE FR GB IT NL**

(30) Priority: **21.12.1993 US 171239**

(43) Date of publication of application:
**08.12.1999 Bulletin 1999/49**

(62) Document number(s) of the earlier application(s) in
accordance with Art. 76 EPC:
**95910854.9 / 0 735 952**

(73) Proprietor: **MINNESOTA MINING AND
MANUFACTURING COMPANY**
**St. Paul,**
**Minnesota 55133-3427 (US)**

(72) Inventors:
• **Jonza, James M.**
**c/o Minnesota Mining and Manufacturing**
**Company**
**St. Paul, MN 55133-3427 (US)**

• **Weber, Michael F.**
**c/o Minnesota Mining and Manufacturing**
**Company**
**St. Paul, MN 55133-3427 (US)**
• **Ouderkirk, Andrew J.**
**c/o Minnesota Mining and Manufacturing**
**Company**
**St. Paul, MN 55133-3427 (US)**
• **Stover, Carl A.**
**c/o Minnesota Mining and Manufacturing**
**Company**
**St. Paul, MN 55133-3427 (US)**

(74) Representative: **Vossius & Partner**
**Siebertstrasse 4**
**81675 München (DE)**

(56) References cited:
**EP-A- 0 488 544**     **GB-A- 2 177 814**
**US-A- 2 604 817**     **US-A- 3 610 729**
**US-A- 5 210 548**

**Description**

BACKGROUND OF THE INVENTION

The present invention relates to multilayered polymeric films in which alternating layers include a crystalline naphthalene dicarboxylic acid polyester and another selected polymer.

Such films can be used to make optical interference filters that reflect light via constructive interferences between a multiplicity of layers with low and high indices of refraction. The pioneering work on the reflection of light from multilayered polymeric films is described in Alfrey et al., Polymer Engineering And Science, Vol. 9, No. 6, Pages 400-404, November 1969, Radford et al., Polymer Engineering And Science, Vol. 13, No. 3, Pages 216-221, May 1973, and U.S. Patent 3,610,729 (Rogers).

U.S. Patent 4,310,584 (Cooper et al.) describes the use of polyesters in a multilayered iridescent light-reflecting film. The film includes alternating layers of a high refractive index polymer and a polymer with a lower refractive index. The high refractive index polymer is a cast non-oriented film that includes a thermoplastic polyester or copolyester such as polyethylene terephthalate (PET), polybutylene terephthalate and various thermoplastic copolyesters which are synthesized using more than one glycol and/or more than one dibasic acid. For example, PETG copolyester is a glycol-modified PET made from ethylene glycol and cyclohexanedimethanol and terephthalic acid or PCTA copolyester which is an acid-modified copolyester of cyclohexanedimethanol with terephthalic and isophthalic acid. More recently, U.S. Patent 5,122,905 (Wheatley) describes a multilayer reflective film with first and second diverse polymeric materials in alternating layers that exhibits at least 30% reflection of incident light. The individual layers have an optical thickness of at least 0.45 micrometers, and adjacent layers have a refractive index difference of at least 0.03. U.S. Patent 5,122,906 (Wheatley et al.) describes similar reflecting bodies, where a substantial majority of individual layers have an optical thickness of not more than 0.09 micrometers or not less than 0.45 micrometers, and adjacent layers have a refractive index difference of at least 0.03. U.S. Patent 5.126.880 (Wheatley et al.) also describes multilayer reflecting bodies with a portion of the layers having thicknesses between 0.09 and 0.45 micrometers, and the remaining layers having optical thicknesses of not greater than 0.09 $\mu$m or not less than 0.45 $\mu$m. The refractive index difference is at least 0.03. All three Wheatley patents teach that it is difficult to make a multilayer 1/4 wavelength stack of polymeric material operating with constructive interference without noticeable iridescence. The Wheatley '880 Patent describes that thicker layers provide a uniform background reflectance, so that 1/4 wavelength peak reflectivity is less noticeable to the naked eye.

U.S. Patent 3,610,729 (Rogers) teaches that a multilayer polymeric film could be uniaxially oriented to reflect light of one plane of polarization, while substantially transmitting the other. The patent describes a sheet polarizer made of alternating polymeric layers, one layer being birefringent and the other isotropic. Birefringence in the one layer may be developed by unidirectional orientation of the polymer molecules of the multilayered sheet due to stretching of the film along that direction. The multilayered sheet is stretched to obtain the highest birefringence with the constraint that until one refractive index of the birefringent layers equals the refractive index of adjacent isotropic layers. Polystyrene, polyethylene terephthalate, polysulfone, polycarbonate, and polyparaxylylene are mentioned as useful materials. U.S. Patent 4,525,413 (Rogers) describes the use of birefringent polymers in alternating layers that exhibit a geometric index of 0.5 or higher. Although extremely high indices of refraction are achievable with some of the materials listed in the Roger's '413 patent, these materials present serious problems in the manufacture of useful devices due to poor optical transmission, extrudibility and high cost.

Current commercially-available polarizers are based on either oriented dyed polymer films (absorbing polarizers) or tilted thin film polarizers (MacNeille polarizers). In absorbing polarizers, light of one plane of polarization is absorbed and converted into heat. Tilted thin film polarizers function as reflective polarizers. Reflective polarizers are often preferred for two reasons. First, reflection minimizes thermal management problems particularly when the polarizer is used in liquid crystal display (LCD) projection systems. Second, plane of polarization of the reflected light can be re-oriented to increase the overall optical throughput of one polarization.

For large areas, standard tilted thin film optic polarizers are too bulky, and absorbing polarizers are presently the only option. In addition to the aforementioned thermal management problems, absorbing polarizers suffer from bleaching of the dye in intense light as well as low melting temperature of the polyvinyl alcohol (PVA) base polymer and water solubility of PVA. U.S. Patent 4,756,953 (Utsumi) describes the use of a dichroic dye incorporated into polyethylene naphthalate (PEN) that has been uniaxially oriented. PEN has the advantage of a higher melt temperature and decreased water solubility as compared to conventional PVA based polarizers.

Tilted thin film polarizers can be collapsed to a relatively thin sheet of approximately 0.020 inches by successively depositing thin films on repeating microprism substrates. (M. F. Weber, "Retroreflecting Sheet Polarizer", SID conf. proceedings, Boston, Massachusetts, May 1992, p. 427; M. F. Weber, "Retroreflecting Sheet Polarizer", SID conf. proceedings, Seattle, Washington, May 1993, p. 669.) Such polarizers are characterized by high cost since thin film vacuum deposition techniques are used.

EPO Patent Application 488,544 also describes a polarizer of alternating diverse polymeric layers. The polarizer includes multiple alternating oriented layers of at least first and second polymeric materials having respective nonzero stress optical coefficients which are sufficiently different to produce a refractive index mismatch between the polymeric materials. PEN is mentioned as a suitable polymer alleging possession of a "negative stress optical coefficient" which implies that the PEN will have a lower index of refraction in the stretch direction than adjacent layers.

## SUMMARY OF THE INVENTION

A multilayered polymer film comprising a body of a plurality of alternating layers according to claim 1.

## BRIEF DESCRIPTION OF THE DRAWINGS

The invention will be further explained with reference to the drawings.

Figures 1a and 1b are diagrammatical views of a polarizer comprising PEN and coPEN layers.
Figure 2 is a graphical view illustrating the refractive indices characteristics of the PEN and coPEN layers .
Figure 3 is a graphical view of computer simulated data of percent transmission of a 50-layer PEN/coPEN film stack based on the indices shown in Figure 2.
Figure 4 is a graphical view of computer simulated data of percent transmission of an equally biaxially stretched 300-layer PEN/coPET mirror.
Figure 5 is a graphical view of percent measured transmission of a 51-layer I.R. polarizer with the first order peak near 1,300 nm.
Figure 6 is a graphical view of percent measured transmission of eight 51-layer polarizers laminated together.
Figure 7 is a graphical view of percent measured transmission of a 204-layer polarizer.
Figure 8 is a graphical view of percent measured transmission of two 204-layer polarizers laminated together.
Figure 9 is a schematic view of an overhead projector.
Figure 10 shows a two layer stack of films forming a single interface.
Figures 11 and 12 show reflectivity versus angle curves for a uniaxial birefringent system in a medium of index 1.60.
Figure 13 shows reflectivity versus angle curves for a uniaxial birefringent system in a medium of index 1.0.
Figures 14, 15 and 16 show various relationships between in-plane indices and z-index for a uniaxial birefringent system.
Figure 17 shows off axis reflectivity versus wavelength for two different uniaxial birefringent systems.
Figure 18 shows the effect of introducing a y-index difference in a biaxial birefringent film.
Figure 19 shows the effect of introducing a z-index difference in a biaxial birefringent film.
Figure 20 shows a contour plot summarizing the information from Figures 18 and 19;
Figures 21-26 show optical performance of multilayer mirrors given in the mirror Examples; and
Figures 22-30 show optical performance of multilayer polarizers given in the polarizer Examples.

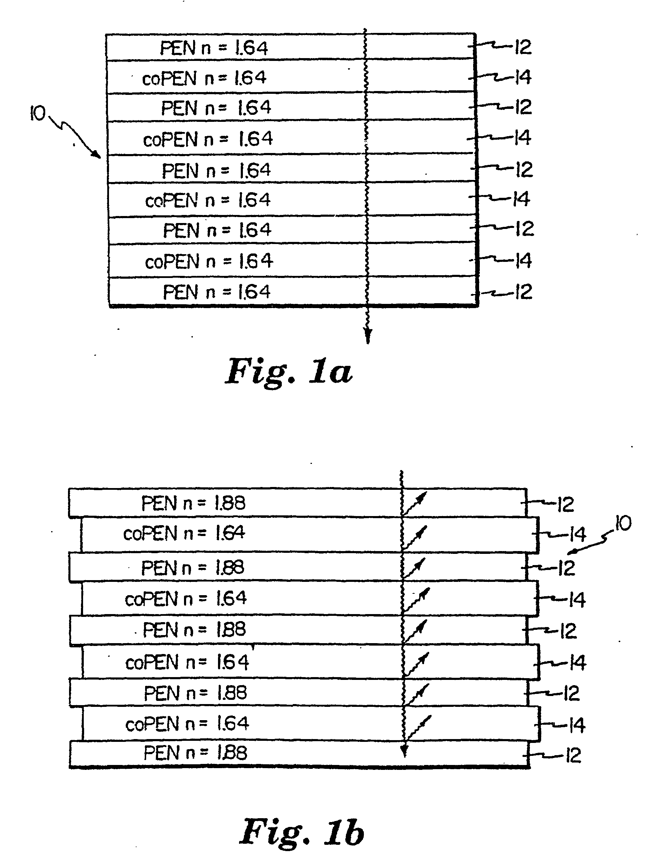

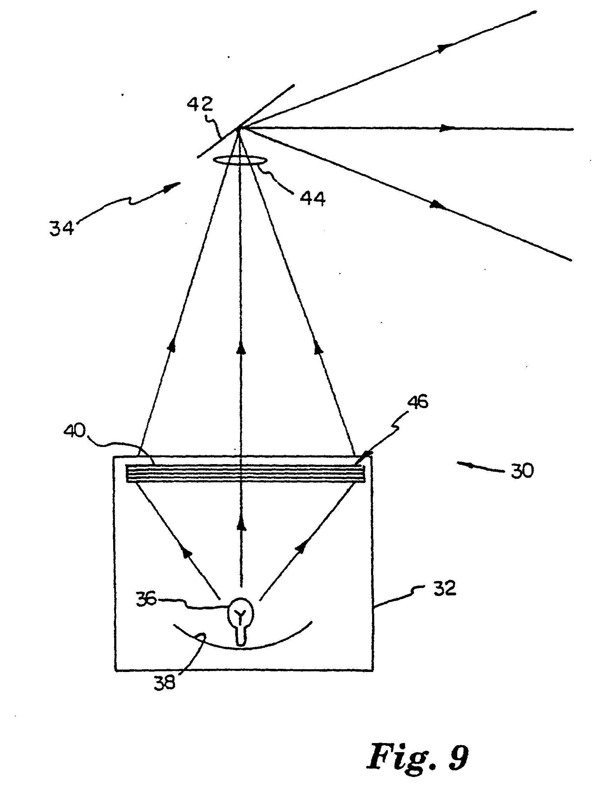

Figures 1a, 1b, and 9 are not to scale, and all the figures are intended to be merely illustrative and non-limiting.

## DETAILED DESCRIPTION OF ILLUSTRATIVE EMBODIMENTS

Figures 1a and 1b illustrate a multilayered polymeric sheet 10 having alternating layers of a crystalline naphthalene dicarboxylic acid polyester such as 2,6 polyethylene naphthalate (PEN) 12 and a selected polymer 14 useful as a reflective polarizer or mirror. By stretching PEN/selected polymer over a range of uniaxial to biaxial orientation, a film is created with a range of reflectivities for differently oriented plane-polarized incident light. If stretched biaxially, the sheet can be stretched asymetrically along orthogonal axes or symmetrically along orthogonal axes to obtain desired polarizing and reflecting properties.

For the polarizer, the sheet is preferably oriented by stretching in a single direction and the index of refraction of the PEN layer exhibits a large difference between incident light rays with the plane of polarization parallel to the oriented and transverse directions. The index of refraction associated with an in-plane axis (an axis parallel to the surface of the film) is the effective index of refraction for plane-polarized incident light whose plane of polarization is parallel to that axis. By oriented direction is meant the direction in which the film is stretched. By transverse direction is meant that direction orthogonal in the plane of the film to the direction in which the film is oriented.

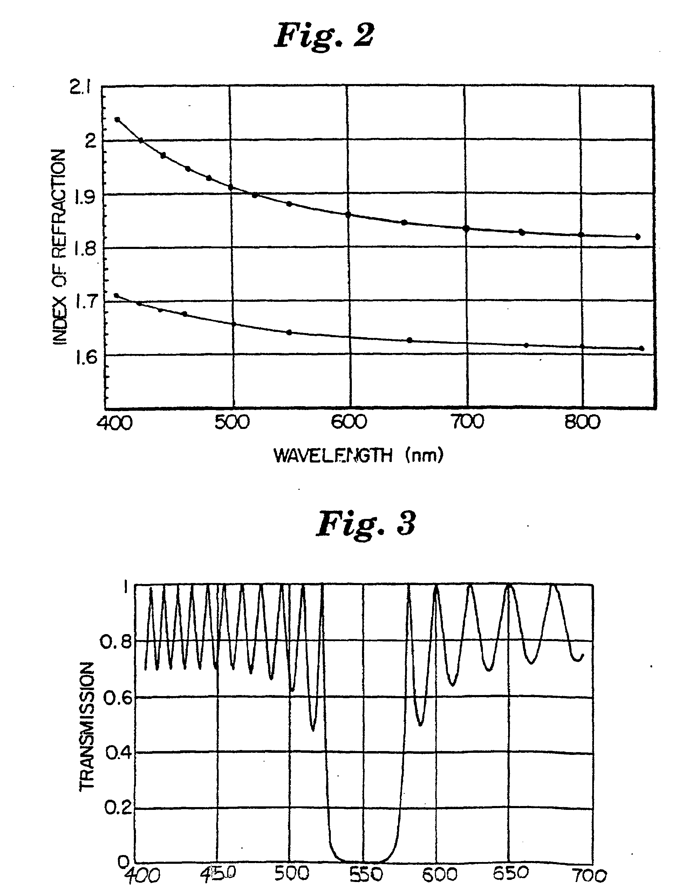

PEN is a preferred material because of its high positive stress optical coefficient and permanent birefringence after stretching, with the refractive index for polarized incident light of 550 nm wavelength increasing when the plane of polarization is parallel to the stretch direction from about 1.64 to as high as about 1.9. The differences in refractive indices associated with different in-plane axes exhibited by PEN and a 70-naphthalate/30- terephthalate copolyester (coPEN) for a 5:1 stretch ratio are illustrated in Figure 2. In Figure 2, the data on the lower curve represent the index of refraction of PEN in the transverse direction and the coPEN while the upper curve represents the index of refraction of PEN in the stretch direction. PEN exhibits a difference in refractive index of 0.25 to 0.40 in the visible spectrum. The birefringence (difference in refractive index) can be increased by increasing the molecular orientation. PEN is heat stable from about 155°C up to about 230°C depending upon shrinkage requirements of the application. Although PEN has been specifically discussed above as the preferred polymer for the birefringent layer, polybutylene naphthalate is also a suitable material as well as other crystalline naphthalene dicarboxylic polyesters. The crystalline naphthalene dicarboxylic polyester should exhibit a difference in refractive indices associated with different in-plane axes of at least 0.05 and preferably above 0.20.

Minor amounts of comonomers may be substituted into the naphthalene dicarboxylic acid polyester so long as the high refractive index in the stretch direction(s) is not substantially compromised. A drop in refractive index (and therefore decreased reflectivity) may be counter balanced by advantages in any of the following: adhesion to the selected polymer layer, lowered temperature of extrusion, better match of melt viscosities, better match of glass transition temperatures for stretching. Suitable monomers include those based on isophthalic, azelaic, adipic, sebacic, dibenzoic, terephthalic, 2,7- naphthalene dicarboxylic, 2,6-naphthalene dicarboxylic or cyclohexanedicarboxylic acids.

The PEN/selected polymer resins preferably have similar melt viscosities so as to obtain uniform multilayer coextrusion. The two polymers preferably have a melt viscosity within a factor of 5 at typical shear rates.

The PEN and the preferred selected polymer layers exhibit good adhesion properties to each other while still remaining as discrete layers within the multilayered sheet.

The glass transition temperatures of the polymers are compatible so adverse effects such as cracking of one set of polymer layers during stretching does not occur. By compatible is meant that the glass transition temperature of the selected polymer is lower than the glass transition temperature of the PEN layer. The glass transition temperature of the selected polymer layer temperature may be slightly higher than the glass transition temperature of the PEN layer, but by no more than 40°C.

Preferably, the layers have a 1/4 wavelength thickness with different sets of layers designed to reflect different wavelength ranges. Each layer does not have to be exactly 1/4 wavelength thick. The overriding requirement is that the adjacent low-high index film pair have a total optical thickness of 0.5 wavelength. The bandwidth of a 50-layer stack of PEN/coPEN layers having the index differential indicated in Figure 2, with layer thicknesses chosen to be a 1/4 wavelength of 550 nm, is about 50 nm. This 50-layer stack provides roughly a 99 percent average reflectivity in this wavelength range with no measurable absorption. A computer-modeled curve showing less than 1 percent transmission (99 percent reflectivity) is illustrated in Figure 3. Figures 3-8 include data characterized as percent transmission. It should be understood that since there is no measurable absorbance by the film that percent reflectivity is approximated by the following relationship:

$$100 - (\text{percent transmission}) = (\text{percent reflectivity}).$$

The preferred selected polymer layer 14 remains isotropic in refractive index and substantially matches the refractive index of the PEN layer associated with the transverse axis as illustrated in Figure 1a. Light with its plane of polarization in this direction will be predominantly transmitted by the polarizer while light with its plane of polarization in the oriented direction will be reflected as illustrated in Figure 1b.

In addition, the reflective polarizer would be useful as a thin infrared sheet polarizer. The need for a thin infrared sheet polarizer is described by Baba et al. (Optics Letters Vol. 17, No. 8, Page 622-624, April 15, 1992). Baba et al. describe a polarizer made by stretching gold islands embedded in films of glass. However, such polarizers operate on resonant absorption phenomenon and as such are not reflective polarizers.

The reflective polarizer is useful in optical elements such as ophthalmic lenses, mirrors and windows. The polarizer is characterized by a mirror-like look which is considered stylish in sunglasses. In addition, PEN is a very good ultraviolet filter, absorbing ultraviolet efficiently up to the edge of the visible spectrum.

For the polarizer, the PEN/selected polymer layers have at least one axis for which the associated indices of refraction are preferably substantially equal. The match of refractive indices associated with that axis, which typically is the transverse axis, results in substantially no reflection of light in that plane of polarization. The selected polymer layer may also exhibit a decrease in the refractive index associated with the stretch direction. A negative birefringence of the selected polymer has the advantage of increasing the difference between indices of refraction of adjoining layers associated with the orientation axis while the reflection of light with its plane of polarization parallel to the transverse direction is still negligible. Differences between the transverse-axis-associated indices of refraction of adjoining layers after stretching should be less than 0.05 and preferably less than 0.02. Another possibility is that the selected polymer exhibits some positive birefrigence due to stretching, but this can be relaxed to match the refractive index of the transverse axis of the PEN layers in a heat treatment. The temperature of this heat treatment should not be so high as to relax the birefrigence in the PEN layers.

The preferred selected polymer for the polarizer is a copolyester of the reaction product of a naphthalene dicarboxylic acid or its ester such as dimethyl naphthalate ranging from 20 mole percent to 80 mole percent and isophthalic or terephthalic acid or their esters such as dimethyl terephthalate ranging from 20 mole percent to 80 mole percent reacted with ethylene glycol. Other copolyesters have the properties discussed above and have a refractive index associated with the transverse axis of approximately 1.59 to 1.69. Of course, the copolyester must be coextrudable with PEN. Other suitable copolyesters are based on isophthalic, azelaic, adipic, sebacic, dibenzoic, terephthalic, 2,7- naphthalene dicarboxylic, 2,6-naphthalene dicarboxylic or cyclohexanedicarboxylic acids. Other suitable variations in the copolyester include the use of ethylene glycol, propane diol, butane diol, neopentyl glycol, polyethylene glycol, tetramethylene glycol, diethylene glycol, cyclohexanedimethanol, 4-hydroxy diphenol, propane diol, bisphenol A, and 1,8-dihydroxy biphenyl, or 1,3-bis(2-hydroxyethoxy)benzene as the diol reactant. A volume average of the refractive indices of the monomers would be a good guide in preparing useful copolyesters. In addition, copolycarbonates having a glass transition temperature compatible with the glass transition temperature of PEN and with a refractive index associated with the transverse axis of approximately 1.59 to 1.69 are also useful as a selected polymer. Formation of the copolyester or copolycarbonate by transesterification of two or more polymers in the extrusion system is another possible route to a viable selected polymer.

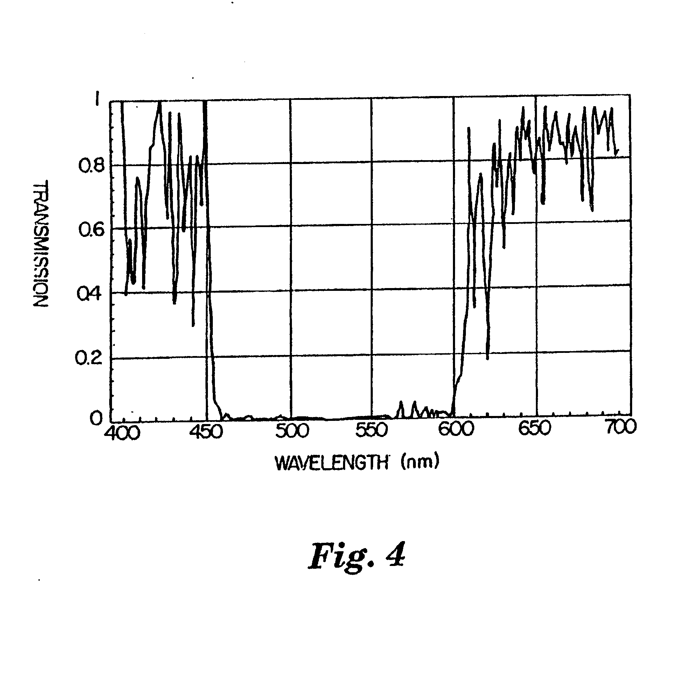

To make a mirror, two uniaxially stretched polarizing sheets 10 are positioned with their respective orientation axes rotated 90°, or the sheet 10 is biaxially stretched. In the latter case, both PEN refractive indices in the plane of the sheet increase and the selected polymer should be chosen with as low of a refractive index as possible to reflect light of both planes of polarization. Biaxially stretching the multilayered sheet will result in differences between refractive indices of adjoining layers for planes parallel to both axes thereby resulting in reflection of light in both planes of polarization directions. Biaxially stretching PEN will increase the refractive indices associated with those axes of elongation from 1.64 to only 1.75, compared to the uniaxial value of 1.9. Therefore to create a dielectric mirror with 99 percent reflectivity (and thus with no noticeable iridescence) a low refractive index coPET is preferred as the selected polymer. Optical modeling indicates this is possible with an index of about 1.55. A 300-layer film with a 5 percent standard deviation in layer thickness, designed to cover half of the visible spectrum with six overlapping quarterwave stacks, has the predicted performance shown in Figure 4. A greater degree of symmetry of stretching yields an article that exhibits relatively more symmetric reflective properties and relatively less polarizing properties.

If desired, two or more sheets may be used in a composite to increase reflectivity, optical band width, or both. If the optical thicknesses of pairs of layers within the sheets are substantially equal, the composite will reflect, at somewhat greater efficiency, substantially the same band width and spectral range of reflectivity (i.e., "band") as the individual sheets. If the optical thicknesses of pairs of layers within the sheets are not substantially equal, the composite will reflect across a broader band width than the individual sheets. A composite combining mirror sheets with polarizer sheets is useful for increasing total reflectance while still polarizing transmitted light. Alternatively, a single sheet may be asymmetrically biaxially stretched to produce a film having selective reflective and polarizing properties.

The preferred selected polymer for use in a biaxially stretched mirror application is based on terephthalic, isophthalic, sebacic, azelaic or cyclohexanedicarboxylic acid to attain the lowest possible refractive index while still maintaining adhesion to the PEN layers. Naphthalene dicarboxylic acid may still be employed in minor amounts to improve the adhesion to PEN. The diol component may be taken from any that have been previously mentioned. Preferably the selected polymer has an index of refraction of less than 1.65 and more preferably an index of refraction of less than 1.55.

It is not required that the selected polymer be a copolyester or copolycarbonate. Vinyl polymers and copolymers made from monomers such as vinyl naphthalenes, styrenes, ethylene, maleic anhydride, acrylates, methacrylates, might be employed. Condensation polymers other than polyesters and polycarbonates might also be useful, examples include: polysulfones, polyamides, polyurethanes, polyamic acids, polyimides. Naphthalene groups and halogens such as chlorine, bromine and iodine are useful in increasing the refractive index of the selected polymer to the desired level (1.59 to 1.69) to substantially match the refractive index of PEN associated with the transverse direction for a polarizer. Acrylate groups and fluorine are particularly useful in decreasing refractive index for use in a mirror.

Figure 9 illustrates the use of a hot mirror in an overhead projector 30. The projector 30 is a transmissive-type projector, and has many features of a conventional overhead projector, including a base 32 and a projection head 34. The projection head 34 is attached to the base 32 by an arm (not shown), which may be raised or lowered thereby moving the head 34 toward or away from the base 32, by conventional adjustment means. The base 32 includes a light source 36, a power supply (not shown) for the light source 36, and appropriate optical components such as a mirror 38 for directing the light toward a projection stage area 40. The stage area 40 in a conventional overhead projector includes a transparent sheet such as glass typically having at least one fresnel lens integrally formed therein for focusing light toward the head 34. If a transparency having a visual image is placed on the stage 40, the image is collected and projected such as to a nearby projection screen or surface by conventional optics such as a mirror 42 and lens 44 located within the head 34.

A mirror 46 is advantageously used in the overhead projector 30 to reflect the heat-producing infrared energy from the light source 36 while transmitting visible light. When used to reflect infrared energy, the mirror 46 is used as a hot mirror. This is especially important for incandescent light sources where about 85 percent of the emitted energy is in the infrared wavelength. The infrared energy, if uncontrolled, can cause excessive heating of dense transparencies or LCD projection panels that are placed on the projection stage 40. When used as a hot mirror, the mirror 46 is normally positioned between the light source 36 and the projection stage 40. The mirror 46 can be a separate element or the mirror can be applied to an optical component as a coating in the light path between the light source and the projection stage.

Alternatively, the mirror 46 can be used in the overhead projector 30 as a cold mirror, that is a mirror that reflects visible light, while transmitting infrared energy. The mirror may also be positioned as a folding mirror (not shown) between the light source 36 and the projection stage 40. Reflectance of a multilayer cold mirror can easily approach 95 percent for visible light. The mirror can be applied as a cold mirror coating to a spherical concave reflector such as reflector 38 that is placed behind the light source 36 to collect and redirect visible light emitted from the light source while transmitting infrared energy.

Orientation of the extruded film was done by stretching individual sheets of the material in heated air. For economical production, stretching may be accomplished on a continuous basis in a standard length orienter, tenter oven, or both. Economies of scale and line speeds of standard polymer film production may be achieved thereby achieving manufacturing costs that are substantially lower than costs associated with commercially available absorptive polarizers.

Lamination of two or more sheets together is advantageous, to improve reflectivity or to broaden the bandwidth, or to form a mirror from two polarizers. Amorphous copolyesters are useful as laminating materials, with VITEL Brand 3000 and 3300 from the Goodyear Tire and Rubber Co. of Akron, Ohio, noted as materials that have been tried. The choice of laminating material is broad, with adhesion to the sheets 10, optical clarity and exclusion of air being the primary guiding principles.

It may be desirable to add to one or more of the layers, one or more inorganic or organic adjuvants such as an antioxidant, extrusion aid, heat stabilizer, ultraviolet ray absorber, nucleator, surface projection forming agent, and the like in normal quantities so long as the addition does not substantially interfere with the performance of the films.

The following examples are for illustrative purposes.

EXAMPLE 1

PEN and a 70 naphthalate/30 terephthalate copolyester (coPEN) were synthesized in a standard polyester resin kettle using ethylene glycol as the diol. The intrinsic viscosity of both the PEN and the coPEN was approximately 0.6 dl/g. Single layer films of PEN and coPEN were extruded and then uniaxially stretched, with the sides restrained, at approximately 150°C. As extruded, the PEN exhibited an isotropic refractive index of about 1.65, and the coPEN was characterized by an isotropic refractive index of about 1.64. By isotropic is meant that the refractive indices associated with all axes in the plane of the film are substantially equal. Both refractive index values were observed at 550 nm. After stretching at a 5:1 stretch ratio, the refractive index of the PEN associated with the oriented axis increased to approximately 1.88. The refractive index associated with the transverse axis dropped slightly to 1.64. The refractive index of the coPEN film after stretching at a 5:1 stretch ratio remained isotropic at approximately 1.64.

A satisfactory multilayer polarizer was then made of alternating layers of PEN and coPEN by coextrusion using a 51-slot feed block which fed a standard extrusion die. The extrusion was run at approximately 295°C. The PEN was extruded at approximately 23 lb/hr and the coPEN was extruded at approximately 22.3 lb/hr. The PEN skin layers were approximately three times as thick as the layers within the extruded film stack. All internal layers were designed to have an optical 1/4 wavelength thickness for light of about 1300 nm. The 51-layer stack was extruded and cast to a thickness of approximately 0.0029 inches, and then uniaxially stretched with the sides restrained at approximately a 5:1 stretch ratio at approximately 150°C. The stretched film had a thickness of approximately 0.0005 inches.

The stretched film was then heat set for 30 seconds at approximately 230°C in an air oven. The optical spectra were essentially the same for film that was stretched and for film that was subsequently heat set.

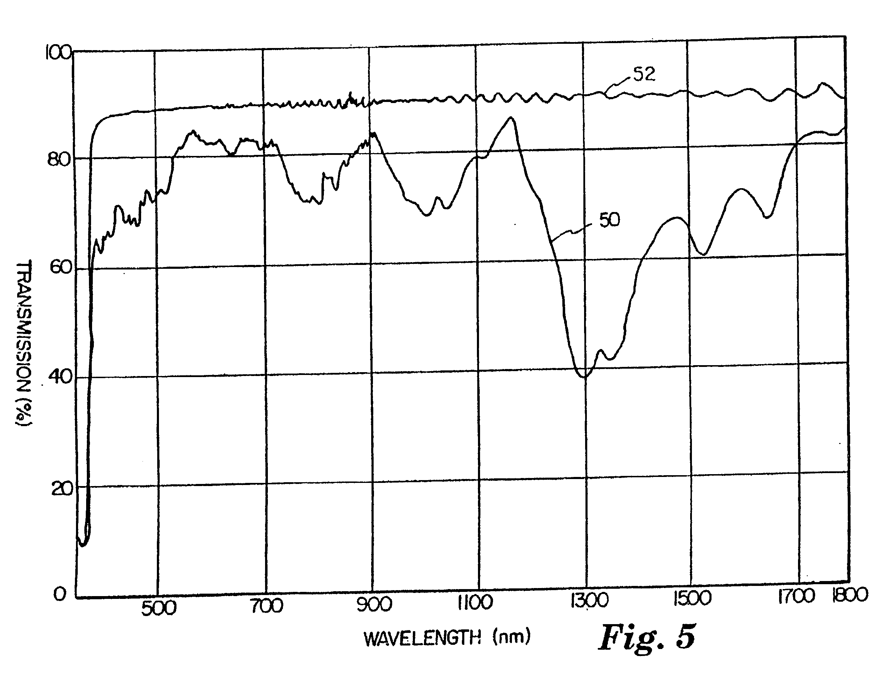

Figure 5 is a graphical view of percent measured transmission of the 51-layer stack in both an oriented direction 50 and in a transverse direction 52 prior to heat setting.

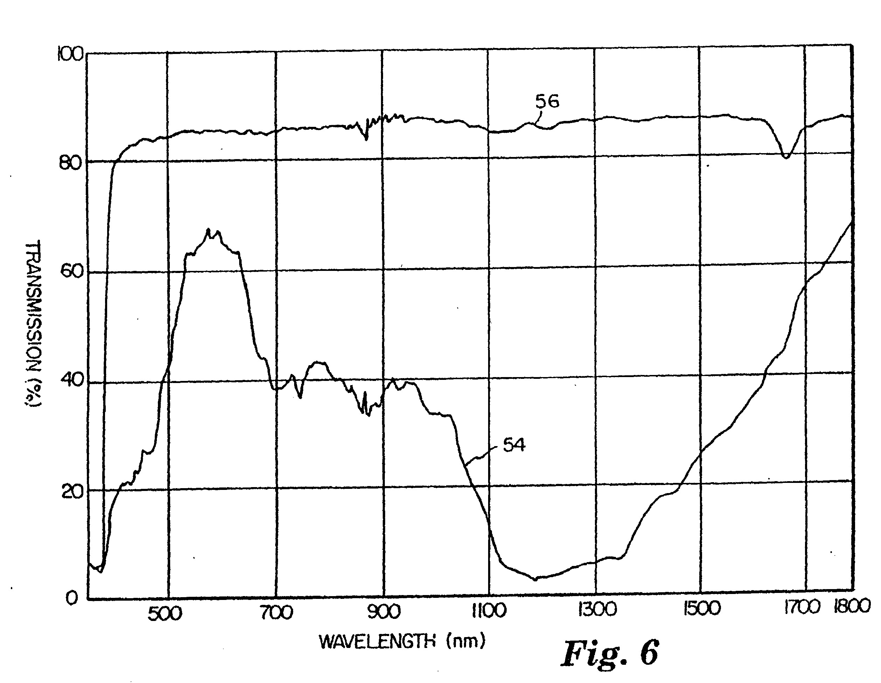

Eight 51-layered polarizers, each made as described above, were combined using a fluid to eliminate the air gaps forming a polarizer of 408 optical layers. Figure 6 is a graph that characterizes the 408 layers showing percent transmission from 350 to 1,800 nm in both an oriented direction 54 and in a transverse direction 56.

EXAMPLE 2

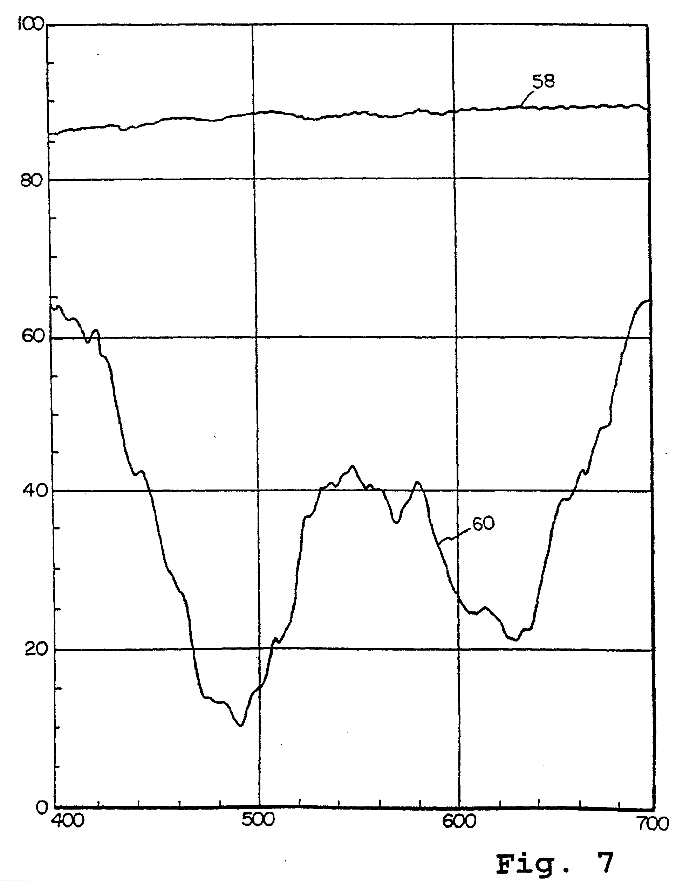

A satisfactory 204-layered polarizer was made by extruding PEN and coPEN in the 51-slot feedblock as described in Example 1 and then employing two layer doubling multipliers in series in the extrusion. The multipliers divide the extruded material exiting the feed block into two half-width flow streams, then stack the half-width flow streams on top of each other. U.S. Patent 3,565,985 describes similar coextrusion multipliers. The extrusion was performed at approximately 295°C using PEN at an intrinsic viscosity of 0.50 dl/g at 22.5 lb/hr while the coPEN at an intrinsic viscosity of 0.60 dl/g was run at 16.5 lb/hr. The cast web was approximately 0.0038 inches in thickness and was uniaxially stretched at a 5:1 ratio in a longitudinal direction with the sides restrained at an air temperature of 140°C during stretching. Except for skin layers, all pairs of layers were designed to be 1/2 wavelength optical thickness for 550 nm light. In the transmission spectra of Figure 7 two reflection peaks in the oriented direction 60 are evident from the transmission spectra, centered about 550 nm. The double peak is most likely a result of film errors introduced in the layer multipliers, and the broad background a result of cumulative film errors throughout the extrusion and casting process. The transmission spectra in the transverse direction is indicated by 58. Optical extinction of the polarizer can be greatly improved by laminating two of these films together with an optical adhesive.

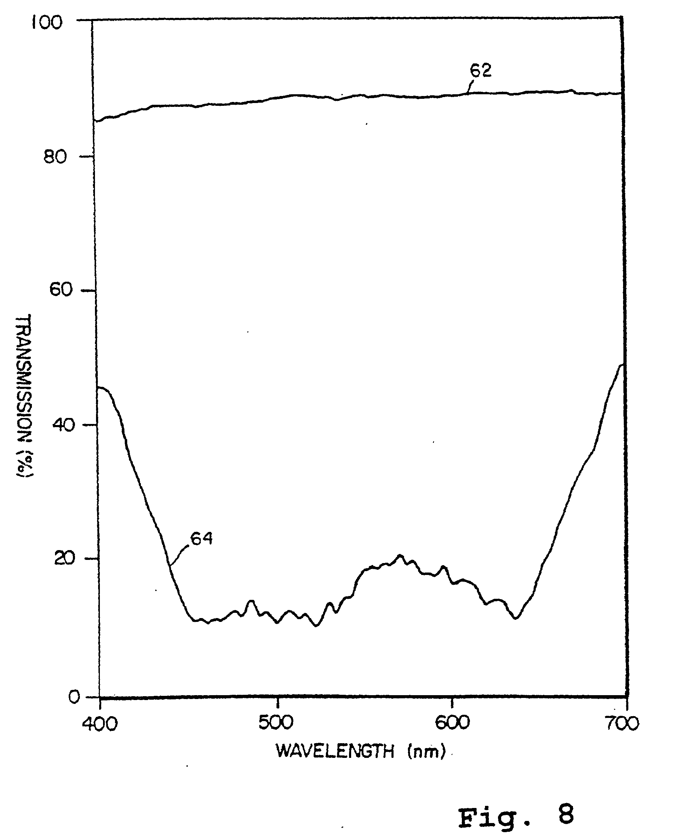

Two 204-layer polarizers made as described above were then hand-laminated using an optical adhesive to produce a 408-layered film stack. Preferably the refractive index of the adhesive should match the index of the isotropic coPEN layer. The reflection peaks evident in Figure 7 are smoothed out for a laminated sample; as shown in Figure 8. This occurs because the peak reflectivity occurs at different wavelengths for different areas of the film, in a random pattern. This effect is often referred to as "iridescence". Lamination of two films reduces iridescence because the random variations in color do not match from one film to another, and tend to cancel when the films are overlapped.

Figure 8 illustrates the transmission data in both the oriented direction 64 and transverse direction 62. Over 80 percent of the light in one plane of polarization is reflected for wavelengths in a range from approximately 450 to 650 nm.

The iridescence is essentially a measure of nonuniformities in the film layers in one area versus adjacent areas. With perfect thickness control, a film stack centered at one wavelength would have no color variation across the sample. Multiple stacks designed to reflect the entire visible spectrum will have iridescence if significant light leaks through random areas at random wavelengths, due to layer thickness errors. The large differential index between film layers of the polymer systems presented here enable film reflectivities of greater than 99 percent with a modest number of layers. This is a great advantage in eliminating iridescence if proper layer thickness control can be achieved in the extrusion process. Computer based optical modeling has shown that greater than 99 percent reflectivity across most of the visible spectrum is possible with only 600 layers for a PEN/coPEN polarizer if the layer thickness values are controlled with a standard deviation of less than or equal to 10 percent.

Optical Behavior of Multilayer Stacks

The optical behavior of a multilayer stack 10 such as that shown above in Figs. 1a and 1b will now be described in more general terms. The multilayer stack 10 can includes hundreds or thousands of layers, and each layer can be made from any of a number of different materials. The characteristics which determine the choice of materials for a particular stack depend upon the desired optical performance of the stack.

The stack can contain as many materials as there are layers in the stack. For ease of manufacture, preferred optical thin film stacks contain only a few different materials. For purposes of illustration, the present discussion will describe multilayer stacks including two materials.

The boundaries between the materials, or chemically identical materials with different physical properties, can be abrupt or gradual. Except for some simple cases with analytical solutions, analysis of the latter type of stratified media with continuously varying index is usually treated as a much larger number of thinner uniform layers having abrupt boundaries but with only a small change in properties between adjacent layers.

The reflectance behavior at any angle of incidence, from any azimuthal direction, is determined by the indices of refraction in each film layer of the film stack. If we assume that all layers in the film stack receive the same process conditions, then we need only look at a single interface of a two component stack to understand the behavior of the entire stack as a function of angle.

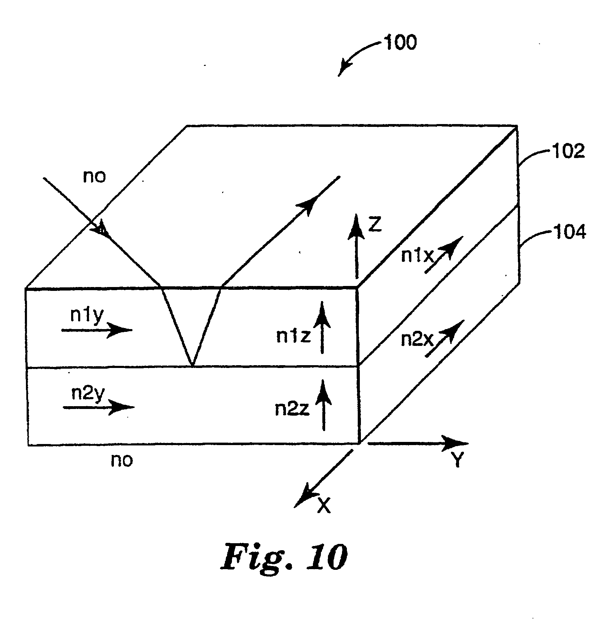

For simplicity of discussion, therefore, the optical behavior of a single interface will be described. It shall be understood, however, that an actual multilayer stack according to the principles described herein could be made of hundreds or thousands of layers. To describe the optical behavior of a single interface, such as the one shown in Fig. 10, the reflectivity as a function of angle of incidence for s and p polarized light for a plane of incidence including the z-axis and one in-plane optic axis will be plotted.

Fig. 10 shows two material film layers forming a single interface, with both immersed in an isotropic medium of index no. For simplicity of illustration, the present discussion will be directed toward an orthogonal multilayer birefringent system with the optical axes of the two materials aligned, and with one optic axis (z) perpendicular to the film plane, and the other optic axes along the x and y axis. It shall be understood, however, that the optic axes need not be orthogonal, and that nonothorgonal systems are well within the scope of the present invention. It shall be further understood that the optic axes also need not be aligned with the film axes to fall within the intended scope of the present invention.

The basic mathematical building blocks for calculating the optics of any stack of films of any thickness, are the well known Fresnel reflection and transmission coefficients of the individual film interfaces. The Fresnel coefficients predict the magnitude of the reflectivity of a given interface, at any angle of incidence, with separate formulas for s and p-polarized light.

The reflectivity of a dielectric interface varies as a function of angle of incidence, and for isotropic materials, is vastly different for p and s polarized light. The reflectivity minimum for p polarized light is due to the so called Brewster effect, and the angle at which the reflectance goes to zero is referred to as Brewster's angle.

The reflectance behavior of any film stack, at any angle of incidence, is determined by the dielectric tensors of all films involved. A general theoretical treatment of this topic is given in the text by R.M.A. Azzam and N.M. Bashara, "Ellipsometry and Polarized Light", published by North-Holland, 1987. The results proceed directly from the universally well known Maxwell's equations.

The reflectivity for a single interface of a system is calculated by squaring the absolute value of the reflection coefficients for p and s polarized light, given by equations 1 and 2, respectively. Equations 1 and 2 are valid for uniaxial orthogonal systems, with the axes of the two components aligned.

1)

$$r_{pp} = \frac{n2z * n2o \sqrt{(n1z^2 - no^2\sin^2\theta)} - n1z * n1o \sqrt{(n2z^2 - no^2\sin^2\theta)}}{n2z * n2o \sqrt{(n1z^2 - no^2\sin^2\theta)} + n1z * n1o \sqrt{(n2z^2 - no^2\sin^2\theta)}}$$

2)

$$r_{ss} = \frac{\sqrt{(n1o^2 - no^2\sin^2\theta)} - \sqrt{(n2o^2 - no^2\sin^2\theta)}}{\sqrt{(n1o^2 - no^2\sin^2\theta)} + \sqrt{(n2o^2 - no^2\sin^2\theta)}}$$

where θ is measured in the isotropic medium.

In a uniaxial birefringent system, n1x = n1y = n1o, and n2x = n2y = n2o.

For a biaxial birefringent system, equations 1 and 2 are valid only for light with its plane of polarization parallel to the x-z or y-z planes, as defined in Fig. 10. So, for a biaxial system, for light incident in the x-z plane, n1o = n1x and n2o = n2x in equation 1 (for p-polarized light), and n1o = n1y and n2o = n2y in equation 2 (for s-polarized light). For light incident in the y-z plane, n1o = n1y and n2o = n2y in equation 1 (for p-polarized light), and n1o = n1x and n2o = n2x in equation 2 (for s-polarized light).

Equations 1 and 2 show that reflectivity depends upon the indices of refraction in the x, y and z directions of each material in the stack. In an isotropic material, all three indices are equal, thus nx = ny = nz. The relationship between nx, ny and nz determine the optical characteristics of the material. Different relationships between the three indices lead to three general categories of materials: isotropic, uniaxially birefringent, and biaxially birefringent.

A uniaxially birefringent material is defined as one in which the index of refraction in one direction is different from the indices in the other two directions. For purposes of the present discussion, the convention for describing uniaxial birefringent systems is for the condition nx = ny ≠ nz. The x and y axes are defined as the in-plane axes and the respective indices, nx and ny, will be referred to as the in-plane indices.

One method of creating a uniaxial birefringent system is to biaxially stretch a polymeric multilayer stack (e.g., stretched along two dimensions). Biaxial stretching of the multilayer stack results in differences between refractive indices of adjoining layers for planes parallel to both axes thus resulting in reflection of light in both planes of polarization.

A uniaxial birefringent material can have either positive or negative uniaxial birefringence. Positive uniaxial birefringence occurs when the z-index is greater than the in-plane indices (nz > nx and ny). Negative uniaxial birefringence occurs when the z-index is less than the in-plane indices (nz < nx and ny).

A biaxial birefringent material is defined as one in which the indices of refraction in all three axes are different, e.g., nx ≠ ny ≠ nz. Again, the nx and ny indices will be referred to as the in-plane indices. A biaxial birefringent system can be made by stretching the multilayer stack in one direction. In other words the stack is uniaxially stretched. For purposes of the present discussion, the x direction will be referred to as the stretch direction for biaxial birefringent stacks.

Uniaxial Birefringent Systems (Mirrors)

The optical properties of uniaxial birefringent systems will now be discussed. As discussed above, the general conditions for a uniaxial birefringent material are nx = ny ≠ nz. Thus if each layer 102 and 104 in Fig. 10 is uniaxially birefringent, n1x = n1y and n2x = n2y. For purposes of the present discussion, assume that layer 102 has larger in-plane indices than layer 104, and that thus n1 > n2 in both the x and y directions. The optical behavior of a uniaxial birefringent multilayer system can be adjusted by varying the values of n1z and n2z to introduce different levels of positive or negative birefringence.

Equation 1 described above can be used to determine the reflectivity of a single interface in a uniaxial birefringent system composed of two layers such as that shown in Fig. 10. Equation 2, for s polarized light, is easily shown to be identical to that of the simple case of isotropic films (nx = ny = nz), so we need only examine equation 1. For purposes of illustration, some specific, although generic, values for the film indices will be assigned. Let n1x = n1y = 1.75, n1z = variable, n2x = n2y = 1.50, and n2z = variable. In order to illustrate various possible Brewster angles in this system, no = 1.60 for the surrounding isotropic media.

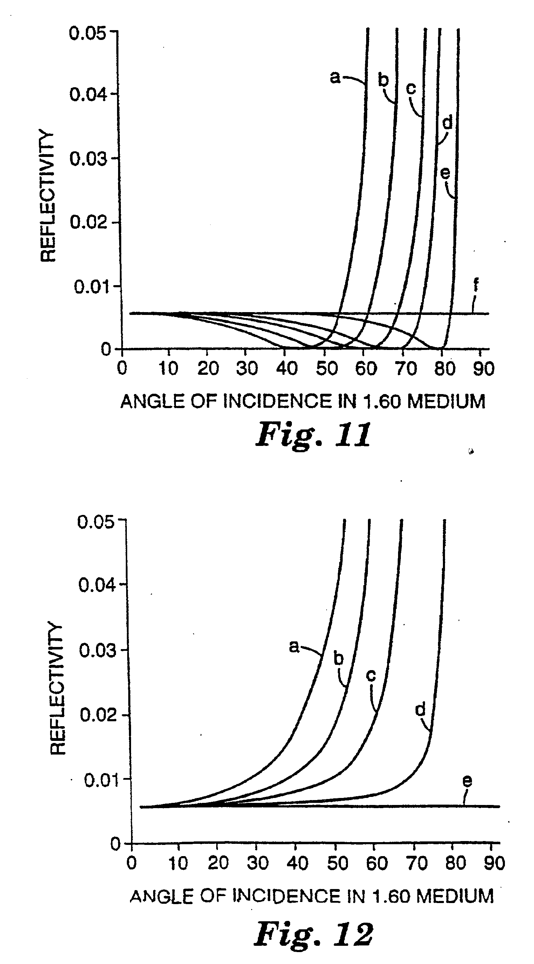

Fig. 11 shows reflectivity versus angle curves for p-polarized light incident from the isotropic medium to the birefringent layers, for cases where n1z is numerically greater than or equal to n2z (n1z ≥ n2z). The curves shown in Fig. 11 are for the following z-index values: a) n1z =1.75, n2z = 1.50; b) n1z = 1.75, n2z = 1.57; c) n1z = 1.70, n2z = 1.60; d) n1z = 1.65, n2z = 1.60; e) n1z = 1.61, n2z = 1.60; and f) n1z = 1.60 = n2z. As n1z approaches n2z, the Brewster angle, the angle at which reflectivity goes to zero, increases. Curves a - e are strongly angular dependent. However, when n1z = n2z (curve f), there is no angular dependence to reflectivity. In other words, the reflectivity for curve f is constant for all angles of incidence. At that point, equation 1 reduces to the angular independent form: (n2o - n1o)/(n2o + n1o). When n1z = n2z, there is no Brewster effect and there is constant reflectivity for all angles of incidence.

Fig. 12 shows reflectivity versus angle of incidence curves for cases where n1z is numerically less than or equal to n2z. Light is incident from isotropic medium to the birefringent layers. For these cases, the reflectivity monotonically increases with angle of incidence. This is the behavior that would be observed for s-polarized light. Curve a in Fig. 12 shows the single case for s polarized light. Curves b-e show cases for p polarized light for various values of nz, in the following order: b) n1z =1.50, n2z = 1.60; c) n1z = 1.55, n2z = 1.60; d) n1z =1.59, n2z = 1.60; and e) n1z = 1.60 = n2z. Again, when n1z = n2z (curve e), there is no Brewster effect, and there is constant reflectivity for all angles of incidence.

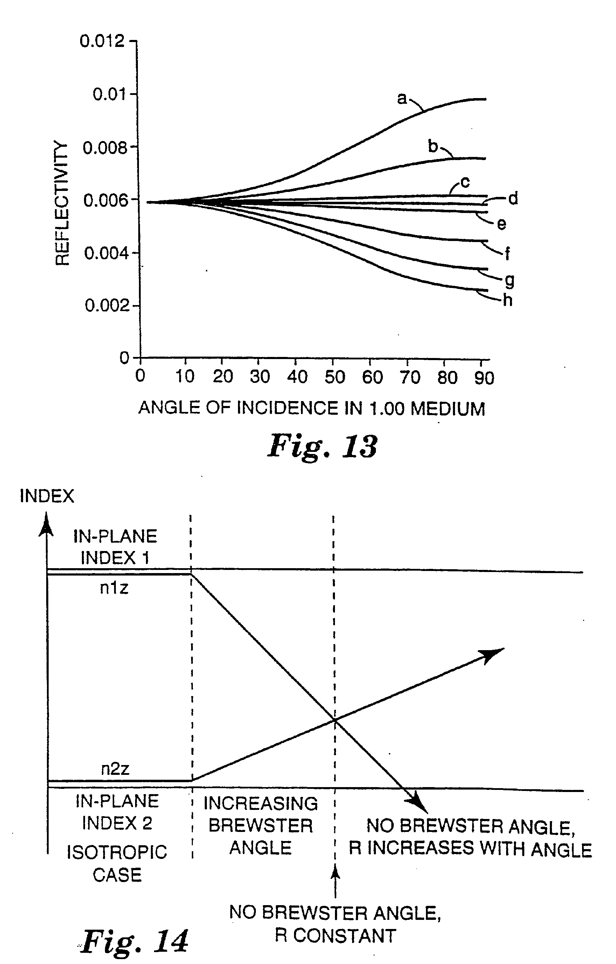

Fig. 13 shows the same cases as Fig. 11 and 12 but for an incident medium of index no =1.0 (air). The curves in Fig. 13 are plotted for p polarized light at a single interface of a positive uniaxial material of indices n2x = n2y = 1.50, n2z = 1.60, and a negative uniaxially birefringent material with n1x = n1y = 1.75, and values of n1z, in the following order, from top to bottom, of: a) 1.50; b) 1.55; c) 1.59; d) 1.60; f) 1.61; g) 1.65; h) 1.70; and i) 1.75. Again, as was shown in Figs. 11 and 12, when the values of n1z and n2z match (curve d), there is no angular dependence to reflectivity.

Figs. 11, 12 and 13 show that the cross-over from one type of behavior to another occurs when the z-axis index of one film equals the z-axis index of the other film. This is true for several combinations of negative and positive uniaxially birefringent, and isotropic materials. Other situations occur in which the Brewster angle is shifted to larger or smaller angles.

Various possible relationships between in-plane indices and z-axis indices are illustrated in Figs. 14, 15 and 16. The vertical axes indicate relative values of indices and the horizontal axes are used to simply separate the various conditions. Each Figure begins at the left with two isotropic films, where the z-index equals the in-plane indices. As one proceeds to the right, the in-plane indices are held constant and the various z-axis indices increase or decrease, indicating the relative amount of positive or negative birefringence.

The case described above with respect to Figs. 11, 12, and 13 is illustrated in Fig. 14. The in-plane indices of material one are greater than the in-plane indices of material two, material 1 has negative birefringence (n1z less than in-plane indices), and material two has positive birefringence (n2z greater than in-plane indices). The point at which the Brewster angle disappears and reflectivity is constant for all angles of incidence is where the two z-axis indices are equal. This point corresponds to curve f in Fig. 11, curve e in Fig. 12 or curve d in Fig. 13.

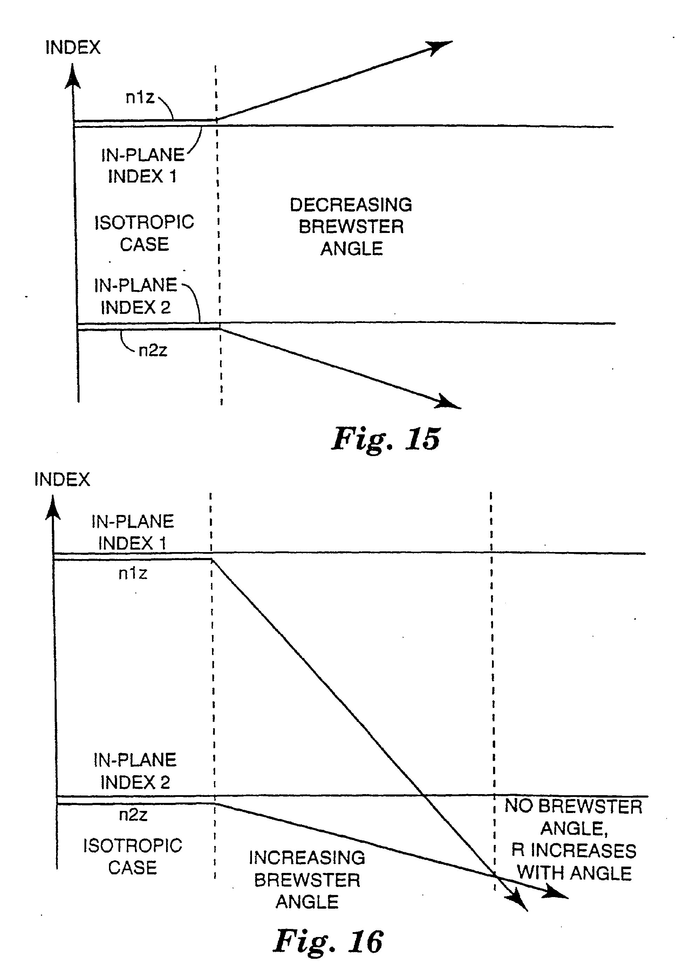

In Fig. 15, material one has higher in-plane indices than material two, but material one has positive birefringence and material two has negative birefringence. In this case, the Brewster minimum can only shift to lower values of angle.

Both Figs. 14 and 15 are valid for the limiting cases where one of the two films is isotropic. The two cases are where material one is isotropic and material two has positive birefringence, or material two is isotropic and material one has negative birefringence. The point at which there is no Brewster effect is where the z-axis index of the birefringent material equals the index of the isotropic film.

Another case is where both films are of the same type, i.e., both negative or both positive birefringent. Fig. 16 shows the case where both films have negative birefringence. However, it shall be understood that the case of two positive birefringent layers is analogous to the case of two negative birefringent layers shown in Fig. 16. As before, the Brewster minimum is eliminated only if one z-axis index equals or crosses that of the other film.

Yet another case occurs where the in-plane indices of the two materials are equal, but the z-axis indices differ. In this case, which is a subset of all three cases shown in Figs. 14 - 16, no reflection occurs for s polarized light at any angle, and the reflectivity for p polarized light increases monotonically with increasing angle of incidence. This type of article has increasing reflectivity for p-polarized light as angle of incidence increases, and is transparent to s-polarized light. This article can be referred to, then, as a "p-polarizer".

Those of skill in the art will readily recognize that the above described principles describing the behavior of uniaxially birefringent systems can be applied to create the desired optical effects for a wide variety of circumstances. The indices of refraction of the layers in the multilayer stack can be manipulated and tailored to produce devices having the desired optical properties. Many negative and positive uniaxial birefringent systems can be created with a variety of in-plane and z-axis indices, and many useful devices can be designed and fabricated using the principles described here.

Biaxial Birefringent Systems (Polarizers)

Referring again to Fig. 10, two component orthogonal biaxial birefringent systems will now be described. Again, the system can have many layers, but an understanding of the optical behavior of the stack is achieved by examining the optical behavior at one interface.

A biaxial birefringent system can be designed to give high reflectivity for light with its plane of polarization parallel to one axis, for all angles of incidence, and simultaneously have low reflectivity for light with its plane of polarization parallel to the other axis at all angles of incidence. As a result, the biaxial birefringent system acts as a polarizer, transmitting light of one polarization and reflecting light of the other polarization. By controlling the three indices of refraction of each film, nx, ny and nz, the desired polarizer behavior can be obtained.

The multilayer reflecting polarizer of PEN/coPEN described above is an example of a biaxial birefringent system. It shall be understood, however, that in general the materials used to construct the multilayer stack need not be polymeric. Any materials falling within the general principles described herein could be used to construct the multilayer stack.

Referring again to Fig. 10, we assign the following values to the film indices for purposes of illustration: n1x = 1.88, n1y = 1.64, n1z = variable, n2x = 1.65, n2y = variable, and n2z = variable. The x direction is referred to as the extinction direction and the y direction as the transmission direction.

Equation 1 can be used to predict the angular behavior of the biaxial birefringent system for two important cases of light with a plane of incidence in either the stretch or the non-stretch directions. The polarizer is a mirror in one polarization direction and a window in the other direction. In the stretch direction, the large index differential of 1.88 - 1.65 = 0.23 in a multilayer stack with hundreds of layers will yield very high reflectivities for s-polarized light. For p-polarized light the reflectance at various angles depends on the n1z/n2z index differential.

In most applications, the ideal reflecting polarizer has high reflectance along one axis and zero reflectance along the other, at all angles of incidence. If some reflectivity occurs along the transmission axis, and if it is different for various wavelengths, the efficiency of the polarizer is reduced, and color is introduced into the transmitted light. Both effects are undesirable. This is caused by a large z-index mismatch, even if the in-plane y indices are matched. The resulting system thus has large reflectivity for p, and is highly transparent to s polarized light. This case was referred to above in the analysis of the mirror cases as a "p polarizer".

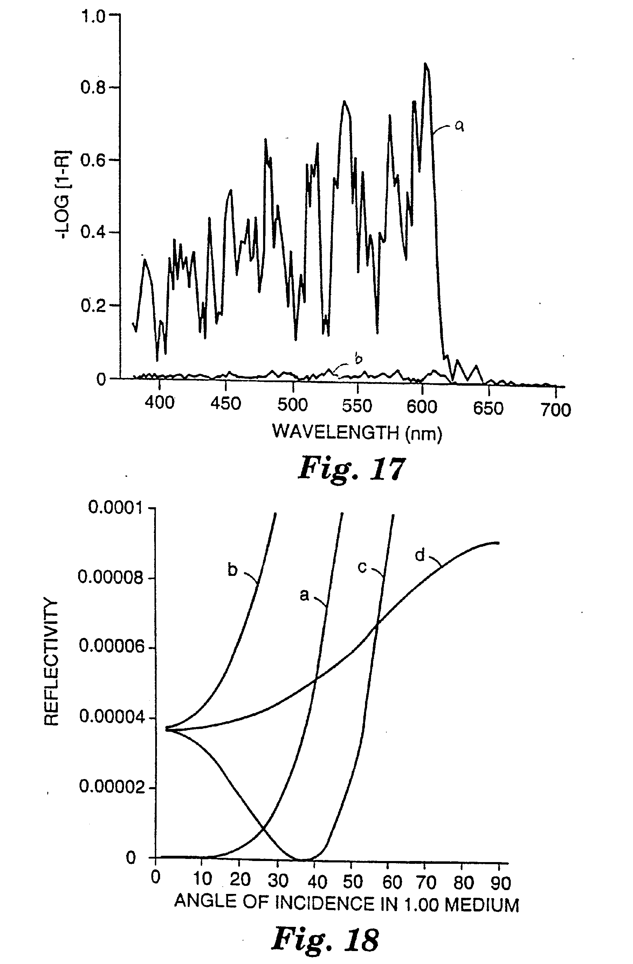

Fig. 17 shows the reflectivity (plotted as -Log[1-R]) at 75° for p polarized light with its plane of incidence in the non-stretch direction, for an 800 layer stack of PEN/coPEN. The reflectivity is plotted as function of wavelength across the visible spectrum (400 - 700 nm). The relevant indices for curve a at 550 nm are n1y =1.64, n1z = 1.52, n2y = 1.64 and n2z = 1.63. The model stack design is a simple linear thickness grade for quarterwave pairs, where each pair is 0.3% thicker than the previous pair. All layers were assigned a random thickness error with a gaussian distribution and a 5% standard deviation.

Curve a shows high off-axis reflectivity across the visible spectrum along the transmission axis (the y-axis) and that different wavelengths experience different levels of reflectivity. Since the spectrum is sensitive to layer thickness errors and spatial nonuniformities, such as film caliper, this gives a biaxial birefringent system with a very nonuniform and "colorful" appearance. Although a high degree of color may be desirable for certain applications, it is desirable to control the degree of off-axis color, and minimize it for those applications requiring a uniform, low color appearance, such as LCD displays or other types of displays.

If the film stack were designed to provide the same reflectivity for all visible wavelengths, a uniform, neutral gray reflection would result. However, this would require almost perfect thickness control. Instead, off-axis reflectivity, and off-axis color can be minimized by introducing an index mismatch to the non-stretch in-plane indices (n1y and n2y) that create a Brewster condition off axis, while keeping the s-polarization reflectivity to a minimum.

Fig. 18 explores the effect of introducing a y-index mismatch in reducing off-axis reflectivity along the transmission axis of a biaxial birefringent system. With n1z = 1.52 and n2z = 1.63 ($\Delta$nz = 0.11), the following conditions are plotted for p polarized light: a) n1y = n2y = 1.64; b) n1y = 1.64, n2y = 1.62; c) n1y = 1.64, n2y = 1.66. Curve a shows the reflectivity where the in-plane indices n1y and n2y are equal. Curve a has a reflectance minimum at 0° but rises steeply after 20°. For curve b, n1y > n2y, and reflectivity increases rapidly. Curve c, where n1y < n2y, has a reflectance minimum at 38°, but rises steeply thereafter. Considerable reflection occurs as well for s polarized light for n1y ≠ n2y, as shown by curve d. Curves a -d of Fig. 18 indicate that the sign of the y-index mismatch (n1y - n2y) should be the same as the z-index mismatch (n1z- n2z) for a Brewster minimum to exist. For the case of n1y = n2y, reflectivity for s polarized light is zero at all angles.

By reducing the z-axis index difference between layers, the off axis reflectivity can be further reduced. If n1z is equal to n2z, Fig. 13 indicates that the extinction axis will still have a high reflectivity off-angle as it does at normal incidence, and no reflection would occur along the nonstretch axis at any angle because both indices are matched (e.g., n1y = n2y and n1z = n2z).

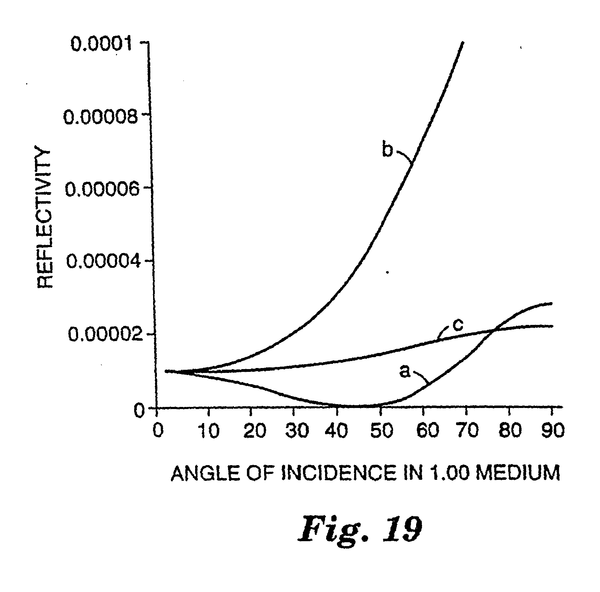

Exact matching of the two y indices and the two z indices may not be possible in some polymer systems. If the z-axis indices are not matched in a polarizer construction, a slight mismatch may be required for in-plane indices n1y and n2y. Another example is plotted in FIG. 19, assuming n1z = 1.56 and n2z = 1.60 ($\Delta$nz = 0.04), with the following y indices a) n1y = 1.64, n2y = 1.65; b) n1y = 1.64, n2y = 1.63. Curve c is for s-polarized light for either case. Curve a, where the sign of the y-index mismatch is the same as the z-index mismatch, results in the lowest off-angle reflectivity.

The computed off-axis reflectance of an 800 layer stack of films at 75° angle of incidence with the conditions of curve a in Fig. 19 is plotted as curve b in Fig. 17. Comparison of curve b with curve a in Fig. 17 shows that there is far less off-axis reflectivity, and therefore lower perceived color, for the conditions plotted in curve b. The relevant indices for curve b at 550 nm are n1y = 1.64, n1z = 1.56, n2y = 1.65 and n2z = 1.60.

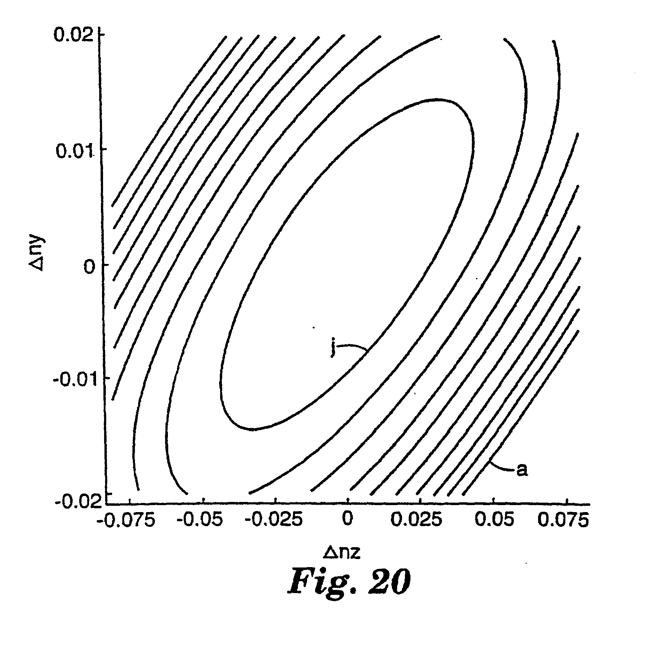

Fig. 20 shows a contour plot of equation 1 which summarizes the off axis reflectivity discussed in relation to Fig. 10 for p-polarized light. The four independent indices involved in the non-stretch direction have been reduced to two index mismatches, $\Delta$nz and $\Delta$ny. The plot is an average of 6 plots at various angles of incidence from 0° to 75° in 15 degree increments. The reflectivity ranges from 0.4 x $10^{-4}$ for contour a, to 4.0 x $10^{-4}$ for contour j, in constant increments of 0.4 x $10^{-4}$. The plots indicate how high reflectivity caused by an index mismatch along one optic axis can be offset by a mismatch along the other axis.

Thus, by reducing the z-index mismatch between layers of a biaxial birefringent systems, and/or by introducing a y-index mismatch to produce a Brewster effect, off-axis reflectivity, and therefore off-axis color, are minimized along the transmission axis of a multilayer reflecting polarizer.

It should also be noted that narrow band polarizers operating over a narrow wavelength range can also be designed using the principles described herein. These can be made to produce polarizers in the red, green, blue, cyan, magenta, or yellow bands, for example.

Materials Selection and Processing

With the above-described design considerations established, one of ordinary skill will readily appreciate that a wide variety of materials can be used to form multilayer mirrors or polarizers according to the invention when processed under conditions selected to yield the desired refractive index relationships. In general, all that is required is that one of the materials have a different index of refraction in a selected direction compared to the second material. This differential can be achieved in a variety of ways, including stretching during or after film formation (e.g., in the case of organic polymers), extruding (e.g., in the case of liquid crystalline materials), or coating. In addition, it is preferred that the two materials have similar rheological properties (e.g., melt viscosities) such that they can be co-extruded.

In general, appropriate combinations may be achieved by selecting, as the first material, a crystalline or semi-crystalline organic polymer and an organic polymer for the second material as well. The second material, in turn, may be crystalline, semi-crystalline, or amorphous, or may have a birefringence opposite that of the first material.

Specific examples of suitable materials include polyethylene naphthalate (PEN) and isomers thereof (e.g., 2,6-, 1,4-, 1,5-, 2,7-, and 2,3-PEN), polyalkylene terephthalates (e.g., polyethylene terephthalate, polybutylene terephthalate, and poly-1,4-cyclohexanedimethylene terephthalate), polyimides (e.g., polyacrylic imides), polyetherimides, atactic polystyrene, polycarbonates, polymethacrylates (e.g., polyisobutyl methacrylate, polypropylmethacrylate, polyethylmethacrylate, and polymethylmethacrylate), polyacrylates (e.g., polybutylacrylate and polymethylacrylate), cellulose derivatives (e.g., ethyl cellulose, cellulose acetate, cellulose propionate, cellulose acetate butyrate, and cellulose nitrate), polyalkylene polymers (e.g., polyethylene, polypropylene, polybutylene, polyisobutylene, and poly(4-methyl)pentene), fluorinated polymers (e.g., perfluoroalkoxy resins, polytetrafluoroethylene, fluorinated ethylenepropylene copolymers, polyvinylidene fluoride, and polychlorotrifluoroethylene), chlorinated polymers (e.g., polyvinylidene chloride and polyvinylchloride), polysulfones, polyethersulfones, polyacrylonitrile, polyamides, silicone resins, epoxy resins, polyvinylacetate, polyether-amides, ionomeric resins, elastomers (e.g., polybutadiene, polyisoprene, and neoprene), and polyurethanes. Also suitable are copolymers, e.g., copolymers of PEN (e.g., copolymers of 2,6-, 1,4-, 1,5-, 2,7-, and/or 2,3-naphthalene dicarboxylic acid, or esters thereof, with (a) terephthalic acid, or esters thereof; (b) isophthalic acid, or esters thereof; (c) phthalic acid, or esters thereof; (d) alkane glycols; (e) cycloalkane glycols (e.g., cyclohexane dimethanol diol); (f) alkane dicarboxylic acids; and/or (g) cycloalkane dicarboxylic acids (e.g., cyclohexane dicarboxylic acid)), copolymers of polyalkylene terephthalates (e.g., copolymers of terephthalic acid, or esters thereof, with (a) naphthalene dicarboxylic acid, or esters thereof; (b) isophthalic acid, or esters thereof; (c) phthalic acid, or esters thereof; (d) alkane glycols; (e) cycloalkane glycols (e.g., cyclohexane dimethanol diol); (f) alkane dicarboxylic acids; and/or (g) cycloalkane dicarboxylic acids (e.g., cyclohexane dicarboxylic acid)), and styrene copolymers (e.g., styrene-butadiene copolymers and styrene-acrylonitrile copolymers), 4,4'-bibenzoic acid and ethylene glycol. In addition, each individual layer may include blends of two or more of the above-described polymers or copolymers (e.g., blends of SPS and atactic polystyrene).

Particularly preferred combinations of layers in the case of polarizers include PEN/co-PEN, polyethylene terephthalate (PET)/co-PEN, PEN/SPS, PET/SPS, PEN/Eastair, and PET/Eastair, where "co-PEN" refers to a copolymer or blend based upon naphthalene dicarboxylic acid (as described above) and Eastair is polycyclohexanedimethylene terephthalate commercially available from Eastman Chemical Co.

Particularly preferred combinations of layers in the case of mirrors include PET/Ecdel, PEN/Ecdel, PEN/SPS, PEN/THV, PEN/co-PET. and PET/SPS, where "co-PET" refers to a copolymer or blend based upon terephthalic acid (as described above), Ecdel is a thermoplastic polyester commercially available from Eastman Chemical Co., and THV is a fluoropolymer commercially available from 3M Co.

The number of layers in the device is selected to achieve the desired optical properties using the minimum number of layers for reasons of economy. In the case of both polarizers and mirrors, the number of layers is preferably less than 10,000, more preferably less than 5,000, and (even more preferably) less than 2,000.

As discussed above, the ability to achieve the desired relationships among the various indices of refraction (and thus the optical properties of the multilayer device) is influenced by the processing conditions used to prepare the multilayer device. In the case of organic polymers which can be oriented by stretching, the devices are generally prepared by co-extruding the individual polymers to form a multilayer film and then orienting the film by stretching at a selected temperature, optionally followed by heat-setting at a selected temperature. Alternatively, the extrusion and orientation steps may be performed simultaneously. In the case of polarizers, the film is stretched substantially in one direction (uniaxial orientation), while in the case of mirrors the film is stretched substantially in two directions (biaxial orientation).

The film may be allowed to dimensionally relax in the cross-stretch direction from the natural reduction in cross-stretch (equal to the square root of the stretch ratio) to being constrained (i.e., no substantial change in cross-stretch dimensions). The film may be stretched in the machine direction, as with a length orienter, in width using a tenter, or at diagonal angles.

The pre-stretch temperature, stretch temperature, stretch rate, stretch ratio, heat set temperature, heat set time, heat set relaxation, and cross-stretch relaxation are selected to yield a multilayer device having the desired refractive index relationship. These variables are inter-dependent; thus, for example, a relatively low stretch rate could be used if coupled with, e.g., a relatively low stretch temperature. It will be apparent to one of ordinary skill how to select the appropriate combination of these variables to achieve the desired multilayer device. In general, however, a stretch ratio of 1:2-10 (more preferably 1:3-7) is preferred in the case of polarizers. In the case of mirrors, it is preferred that the stretch ratio along one axis be in the range of 1:2-10 (more preferably 1:2-8, and most preferably 1:3-7) and the stretch ratio along the second axis be in the range of 1:-0.5-10 (more preferably 1:1-7, and most preferably 1:3-6).

Suitable multilayer devices may also be prepared using techniques such as spin coating (e.g., as described in Boese et al., J. Polym. Sci.: Part B, 30:1321 (1992)) and vacuum deposition; the latter technique is particularly useful in the case of crystalline polymeric organic and inorganic materials.

The invention will now be described by way of the following examples. In the examples, because optical absorption is negligible, reflection equals 1 minus transmission (R = 1 - T).

**Mirror Examples:**

**PET:Ecdel, 601** A coextruded film containing 601 layers was made on a sequential flat-film-making line via a coextrusion process. Polyethylene terephthalate (PET) with an Intrinsic Viscosity of 0.6 dl/g (60 wt. % phenol/40 wt. % dichlorobenzene) was delivered by one extruder at a rate of 75 pounds per hour and Ecdel 9966 (a thermoplastic elastomer available from Eastman Chemical) was delivered by another extruder at a rate of 65 pounds per hour. PET was on the skin layers. The feedblock method (such as that described in U.S. Patent 3,801,429) was used to generate 151 layers which was passed through two multipliers producing an extrudate of 601 layers. U.S. Patent 3,565,985 describes examplary coextrusion multipliers. The web was length oriented to a draw ratio of about 3.6 with the web temperature at about 210°F. The film was subsequently preheated to about 235°F in about 50 seconds and drawn in the transverse direction to a draw ratio of about 4.0 at a rate of about 6 % per second. The film was then relaxed about 5 % of its maximum width in a heat-set oven set at 400°F. The finished film thickness was 2.5 mil.

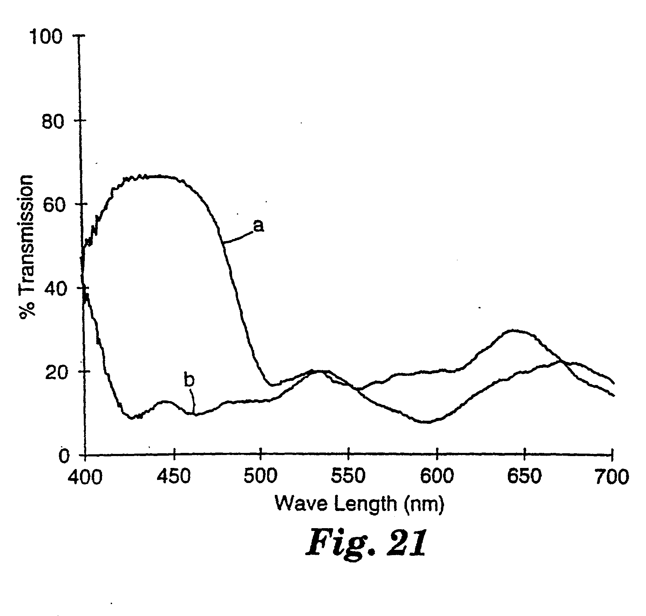

The cast web produced was rough in texture on the air side, and provided the transmission as shown in Figure 21. The % transmission for p-polarized light at a 60° angle (curve b) is similar the value at normal incidence (curve a) (with a wavelength shift).

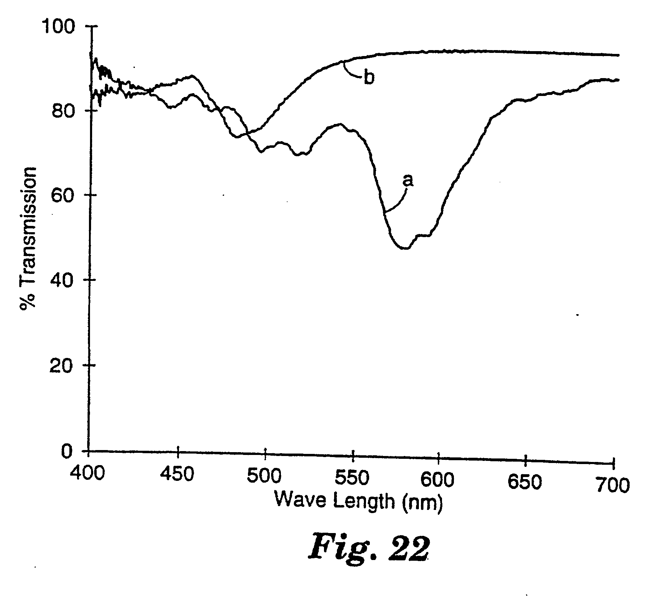

For comparison, film made by Mearl Corporation, presumably of isotropic materials (see Fig. 22) shows a noticeable loss in reflectivity for p-polarized light at a 60° angle (curve b, compared to curve a for normal incidence).

**PET:Ecdel, 151** A coextruded film containing 151 layers was made on a sequential flat-film-making line via a coextrusion process. Polyethylene terephthalate (PET) with an Intrinsic Viscosity of 0.6 dl/g (60 wt phenol/40 wt. % dichlorobenzene) was delivered by one extruder at a rate of 75 pounds per hour and Ecdel 9966 (a thermoplastic elastomer available from Eastman Chemical) was delivered by another extruder at a rate of 65 pounds per hour. PET was on the skin layers. The feedblock method was used to generate 151 layers. The web was length oriented to a draw ratio of about 3.5 with the web temperature at about 210°F. The film was subsequently preheated to about 215°F in about 12 seconds and drawn in the transverse direction to a draw ratio of about 4.0 at a rate of about 25 % per second. The film was then relaxed about 5 % of its maximum width in a heat-set oven set at 400°F in about 6 seconds. The finished film thickness was about 0.6 mil.

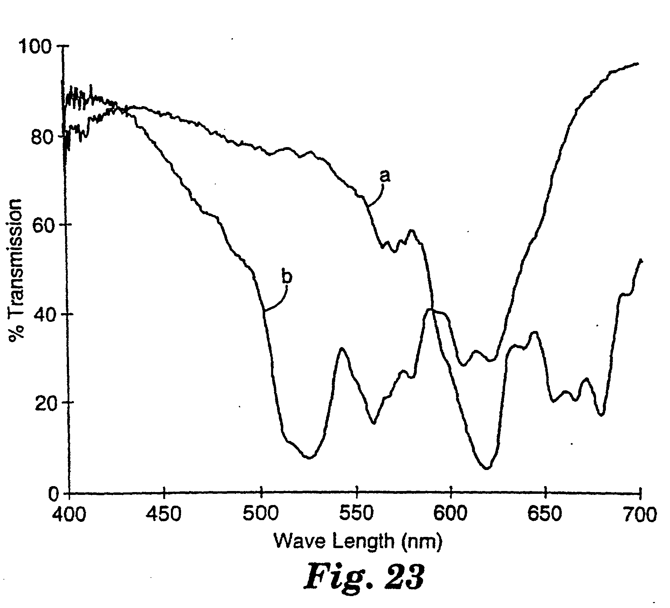

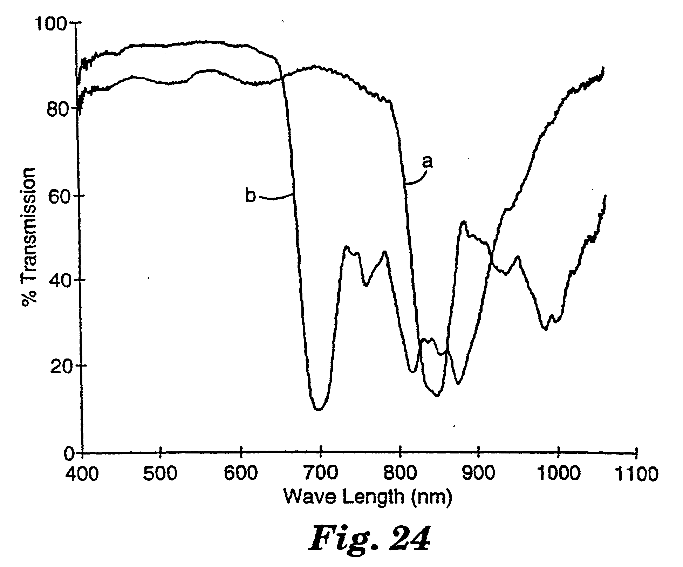

The transmission of this film is shown in Figure 23. The % transmission for p-polarized light at a 60° angle (curve b) is similar the value at normal incidence (curve a) with a wavelength shift. At the same extrusion conditions the web speed was slowed down to make an infrared reflecting film with a thickness of about 0.8 mils. The transmission is shown in Fig. 24 (curve a at normal incidence, curve b at 60 degrees).

**PEN:Ecdel, 225** A coextruded film containing 225 layers was made by extruding the cast web in one operation and later orienting the film in a laboratory film-stretching apparatus. Polyethylene naphthalate (PEN) with an Intrinsic Viscosity of 0.5 dl/g (60 wt. % phenol/40 wt. % dichlorobenzene) was delivered by one extruder at a rate of 18 pounds per hour and Ecdel 9966 (a thermoplastic elastomer available from Eastman Chemical) was delivered by another extruder at a rate of 17 pounds per hour. PEN was on the skin layers. The feedblock method was used to generate 57 layers which was passed through two multipliers producing an extrudate of 225 layers. The cast web was 12 mils thick and 12 inches wide. The web was later biaxially oriented using a laboratory stretching device that uses a pantograph to grip a square section of film and simultaneously stretch it in both directions at a uniform rate. A 7.46 cm square of web was loaded into the stretcher at about 100°C and heated to 130°C in 60 seconds. Stretching then commenced at 100%/sec (based on original dimensions) until the sample was stretched to about 3.5x3.5. Immediately after the stretching the sample was cooled by blowing room temperature air on it.

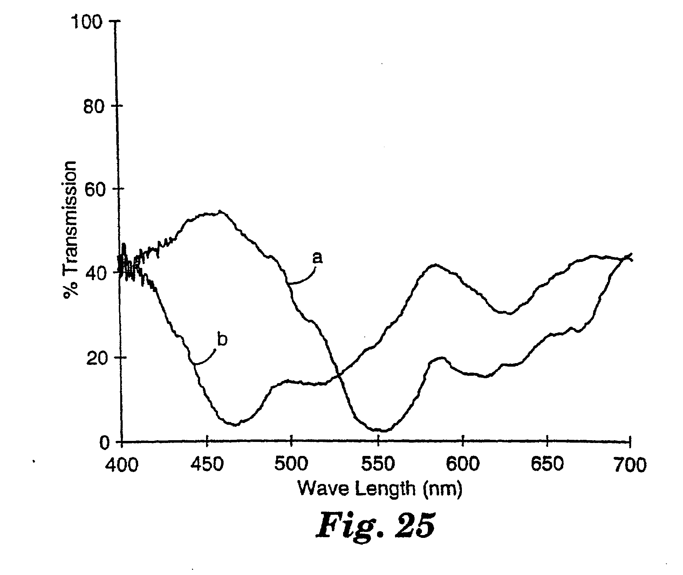

Figure 25 shows the optical response of this multilayer film (curve a at normal incidence, curve b at 60 degrees). Note that the % transmission for p-polarized light at a 60° angle is similar to what it is at normal incidence (with some wavelength shift).

**PEN:THV 500, 449** A coextruded film containing 449 layers was made by extruding the cast web in one operation and later orienting the film in a laboratory film-stretching apparatus. Polyethylene naphthalate (PEN) with an Intrinsic Viscosity of 0.53 dl/g (60 wt. % phenol/40 wt. % dichlorobenzene) was delivered by one extruder at a rate of 56 pounds per hour and THV 500 (a fluoropolymer available from Minnesota Mining and Manufacturing Company) was delivered by another extruder at a rate of 11 pounds per hour. PEN was on the skin layers and 50% of the PEN was present in the two skin layers. The feedblock method was used to generate 57 layers which was passed through three multipliers producing an extrudate of 449 layers. The cast web was 20 mils thick and 12 inches wide. The web was later biaxially oriented using a laboratory stretching device that uses a pantograph to grip a square section of film and simultaneously stretch it in both directions at a uniform rate. A 7.46 cm square of web was loaded into the stretcher at about 100°C and heated to 140°C in 60 seconds. Stretching then commenced at 10%/sec (based on original dimensions) until the sample was stretched to about 3.5x3.5. Immediately after the stretching the sample was cooled by blowing room temperature air at it.

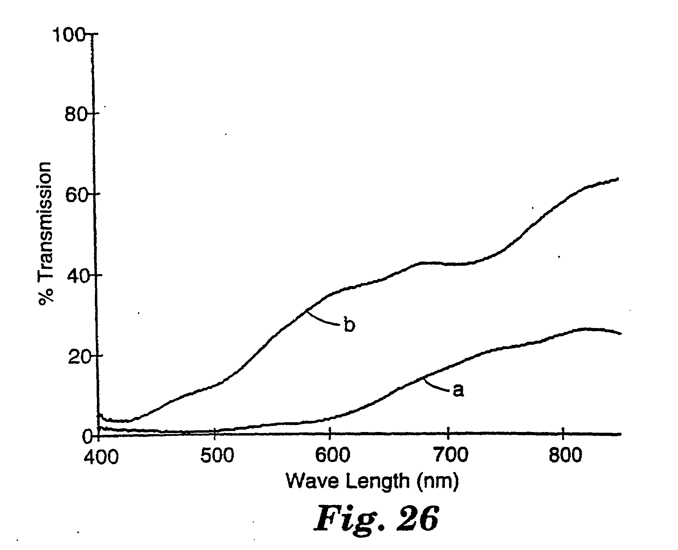

Figure 26 shows the transmission of this multilayer film. Again, curve a shows the response at normal incidence, while curve b shows the response at 60 degrees.

**Polarizer Examples:**

**PEN:CoPEN, 449--Low Color** A coextruded film containing 449 layers was made by extruding the cast web in one operation and later orienting the film in a laboratory film-stretching apparatus. Polyethylene naphthalate (PEN) with an Intrinsic Viscosity of 0.56 dl/g (60 wt. % phenol/40 wt. % dichlorobenzene) was delivered by one extruder at a rate of 43 pounds per hour and a CoPEN (70 mol% 2,6 NDC and 30 mol% DMT) with an intrinsic viscosity of 0.52 (60 wt. % phenol/40 wt. % dichlorobenzene) was delivered by another extruder at a rate of 25 pounds per hour. PEN was on the skin layers and 40 % of the PEN was present in the two skin layers. The feedblock method was used to generate 57 layers which was passed through three multipliers producing an extrudate of 449 layers. The cast web was 10 mils thick and 12 inches wide. The web was later uniaxially oriented using a laboratory stretching device that uses a pantograph to grip a square section of film and stretch it in one direction while it is constrained in the other at a uniform rate. A 7.46 cm square of web was loaded into the stretcher at about 100°C and heated to 140°C in 60 seconds. Stretching then commenced at 10%/sec (based on original dimensions) until the sample was stretched to about 5.5x1. Immediately after the stretching the sample was cooled by blowing room temperature air at it.

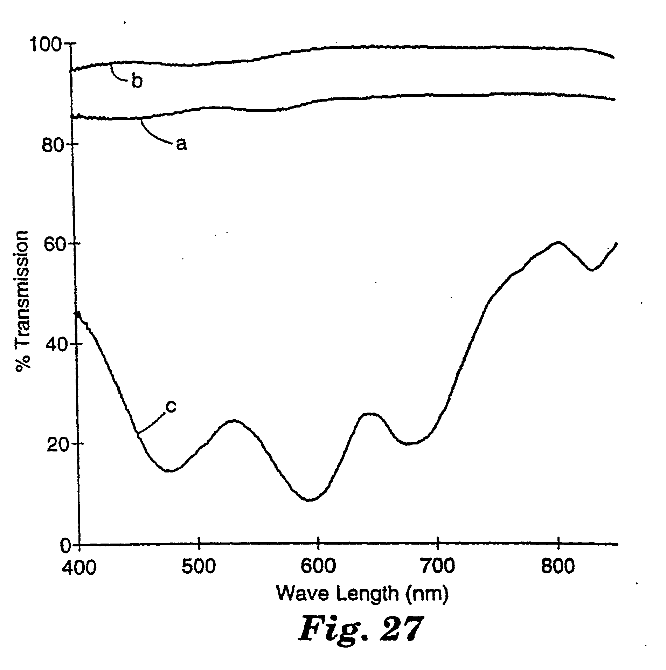

Figure 27 shows the transmission of this multilayer film. Curve a shows transmission of p-polarized light at normal incidence, curve b shows transmission of p-polarized light at 60° incidence, and curve c shows transmission of s-polarized light at normal incidence. Note the very high transmission of p-polarized light at both normal and 60° incidence (85-100%). Transmission is higher for p-polarized light at 60° incidence because the air/PEN interface has a Brewster angle near 60°, so the tranmission at 60° incidence is nearly 100%. Also note the high extinction of s-polarized light in the visible range (400-700nm) shown by curve c.

**PEN:CoPEN, 601--High Color** A coextruded film containing 601 layers was produced by extruding the web and two days later orienting the film on a different tenter than described in all the other examples. Polyethylene Naphthalate (PEN) with an Intrinsic Viscosity of 0.5 dl/g (60 wt. % phenol/40 wt. % dichlorobenzene) was delivered by one extruder at a rate of 75 pounds per hour and CoPEN (70 mol % 2,6 NDC and 30 mol % DMT) with an IV of 0.55 dl/g (60 wt. % phenol/40 wt. % dichlorobenzene) was delivered by another extruder at a rate of 65 pounds per hour. PEN was on the skin layers. The feedblock method was used to generate 151 layers which was passed through two multipliers producing an extrudate of 601 layers. U.S. Patent 3,565,985 describes similar coextrusion multipliers. All stretching was done in the tenter. The film was preheated to about 280°F in about 20 seconds and drawn in the transverse direction to a draw ratio of about 4.4 at a rate of about 6 % per second. The film was then relaxed about 2 % of its maximum width in a heat-set oven set at 460°F. The finished film thickness was 1.8 mil.

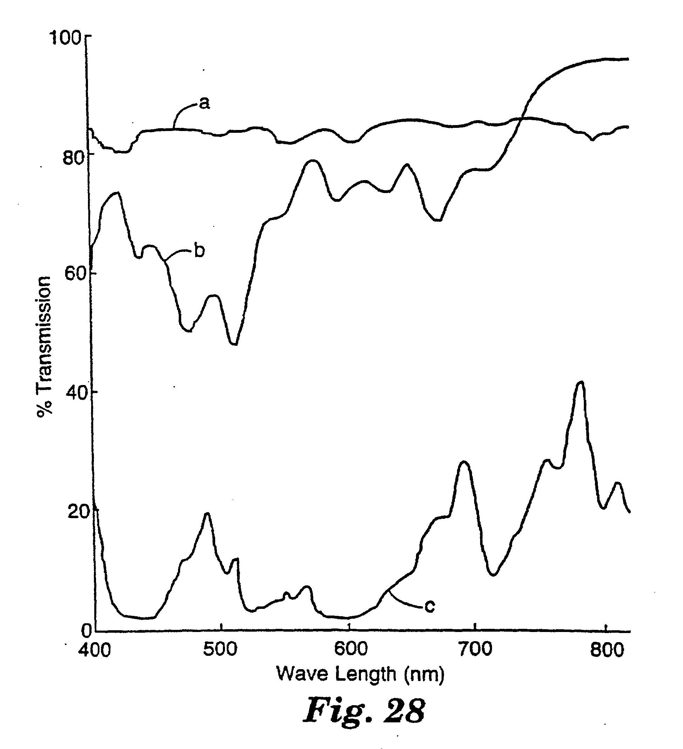

The transmission of the film is shown in Figure 28. Curve a shows transmission of p-polarized light at normal incidence, curve b shows transmission of p-polarized light at 60° incidence, and curve c shows transmission of s-polarized light at normal incidence. Note the nonuniform transmission of p-polarized light at both normal and 60° incidence. Also note the non-uniform extinction of s-polarized light in the visible range (400-700nm) shown by curve c.

**PET:CoPEN, 449** A coextruded film containing 449 layers was made by extruding the cast web in one operation and later orienting the film in a laboratory film-stretching apparatus. Polyethylene Terephthalate (PET) with an Intrinsic Viscosity of 0.60 dl/g (60 wt. % phenol/40 wt. % dichlorobenzene) was delivered by one extruder at a rate of 26 pounds per hour and CoPEN (70 mol % 2,6 NDC and 30 mol % DMT) with an intrinsic viscosity of 0.53 (60 wt. % phenol/40 wt. % dichlorobenzene) was delivered by another extruder at a rate of 24 pounds per hour. PET was on the skin layers. The feedblock method was used to generate 57 layers which was passed through three multipliers producing an extrudate of 449 layers. U.S. Patent 3,565,985 describes similar coextrusion multipliers. The cast web was 7.5 mils thick and 12 inches wide. The web was later uniaxially oriented using a laboratory stretching device that uses a pantograph to grip a square section of film and stretch it in one direction while it is constrained in the other at a uniform rate. A 7.46 cm square of web was loaded into the stretcher at about 100°C and heated to 120°C in 60 seconds. Stretching then commenced at 10%/sec (based on original dimensions) until the sample was stretched to about 5.0x1. Immediately after the stretching the sample was cooled by blowing room temperature air at it. The finished film thickness was about 1.4 mil. This film had sufficient adhesion to survive the orientation process with no delamination.

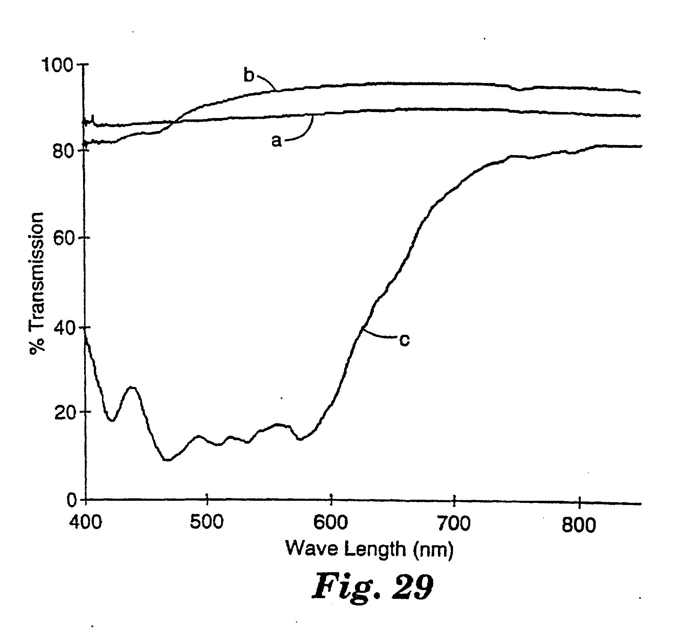

Figure 29 shows the transmission of this multilayer film. Curve a shows transmission of p-polarized light at normal incidence, curve b shows transmission of p-polarized light at 60° incidence, and curve c shows transmission of s-polarized light at normal incidence. Note the very high transmission of p-polarized light at both normal and 60° incidence (80-100%).

**PEN:coPEN, 601** A coextruded film containing 601 layers was made on a sequential flat-film-making line via a coextrusion process. Polyethylene naphthalate (PEN) with an intrinsic viscosity of 0.54 dl/g (60 wt % Phenol plus 40 wt % dichlorobenzene) was delivered by on extruder at a rate of 75 pounds per hour and the coPEN was delivered by another extruder at 65 pounds per hour. The coPEN was a copolymer of 70 mole % 2,6 naphthalene dicarboxylate methyl ester, 15 % dimethyl isophthalate and 15 % dimethyl terephthalate with ethylene glycol. The feedblock method was used to generate 151 layers. The feedblock was designed to produce a gradient distribution of layers with a ration of thickness of the optical layers of 1.22 for the PEN and 1.22 for the coPEN. PEN skin layers were coextruded on the outside of the optical stack with a total thickness of 8 % of the coextruded layers. The optical stack was multiplied by two sequential multipliers. The nominal multiplication ratio of the multipliers were 1.2 and 1.22, respectively. The film was subsequently preheated to 310°F in about 40 seconds and drawn in the transverse direction to a draw ratio of about 5.0 at a rate of 6 % per second. The finished film thickness was about 2 mils.

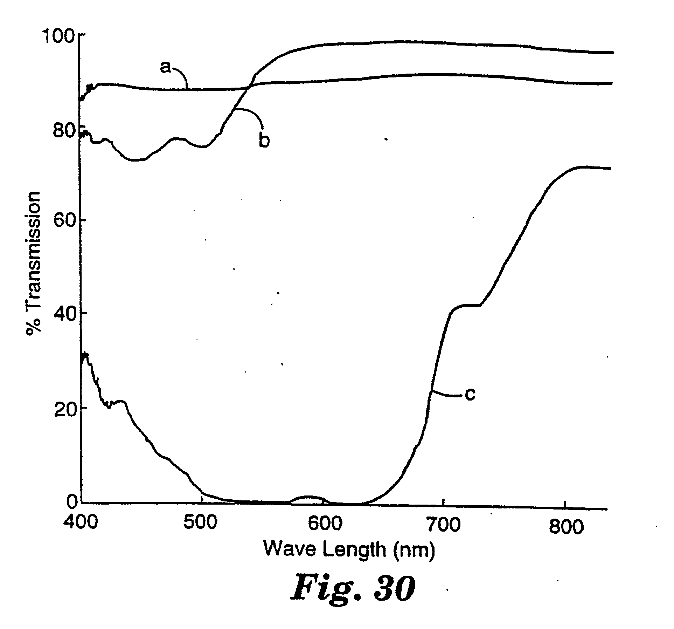

Figure 30 shows the transmission for this multilayer film. Curve a shows transmission of p-polarized light at normal incidence, curve b shows transmission of p-polarized light at 60° incidence, and curve c shows transmission of s-polarized light at normal incidence. Note the very high transmission of p-polarized light at both normal and 60° incidence (80-100%). Also note the very high extinction of s-polarized light in the visible range (400-700nm) shown by curve c. Extinction is nearly 100% between 500 and 650nm.

For those examples using the 57 layer feedblock, all layers were designed for only one optical thickness (1/4 of 550nm), but the extrusion equipment introduces deviations in the layer thicknesses throughout the stack resulting in a fairly broadband optical response. For examples made with the 151 layer feedblock, the feedblock is designed to create a distribution of layer thicknesses to cover a portion of the visible spectrum. Asymmetric multipliers were then used to broaden the distribution of layer thicknesses to cover most of the visible spectrum as described in U.S. Patents 5,094,788 and 5,094,793.

Although the present invention has been described with reference to preferred embodiments, workers skilled in the art will recognize that changes may be made in form and detail without departing from the scope of the invention.

**Claims**

1. A multilayered polymeric optical film, comprising:

   a plurality of alternating layers of a first and second polymeric material useful as a reflective polarizer or mirror, the material layers having refractive indices nx, ny associated respectively with in-plane x and y axes parallel to a surface of the film, the material layers also having refractive indices nz associated with a z-axis perpendicular to the film plane;

   wherein adjoining layers of the first and second material form an interface, the first material layer being birefringent and having an index of refraction associated with at least one of the in-plane axes that is higher than that of the second material layer;
   wherein the refractive index nz of the first material layer is less than the refractive index nz of the second material layer.

2. The multilayered optical film of claim 1, wherein the first and second materials have similar rheological properties such that they can be co-extruded.

3. The multilayered optical film of claim 1, wherein the first material is a crystalline naphthalene dicarboxylic acid polyester.

4. The multilayered optical film of claim 1, wherein the first material layer is uniaxially birefringent.

5. The multilayered optical film of claim 1, wherein the first material layer is biaxially birefringent.

6. The multilayered optical film of claim 1, wherein the multilayered optical film is a reflective polarizer.

7. The multilayered optical film of claim 1, wherein the multilayered optical film is a mirror.


**Patentansprüche**

1. Mehrschichtiger polymerer optischer Film mit:

   mehreren abwechselnden Schichten eines ersten und
   zweiten polymeren Materials, das als ein reflektierender Polarisator oder Spiegel verwendbar ist, wobei die Materialschichten Brechungsindices nx, ny aufweisen, die mit einer x- bzw. y-Achse in gleicher Ebene assoziiert sind, die zu einer Fläche des Films parallel sind, wobei die Materialschichten außerdem Brechungsindices nz aufweisen, die mit einer z-Achse assoziiert sind, die zu der Filmebene senkrecht ist;

   wobei benachbarte Schichten des ersten und zweiten Materials eine Grenzfläche bilden, wobei die erste Materialschicht doppelbrechend ist und einen mit mindestens einer der in der gleichen Ebene liegenden Achsen assoziierten Brechungsindex aufweist, welcher höher als derjenige der zweiten Materialschicht ist;
   wobei der Brechungsindex nz der ersten Materialschicht kleiner als der Brechungsindex nz der zweiten Materialschicht ist.

2. Mehrschichtiger optischer Film nach Anspruch 1,
   wobei das erste und zweite Material ähnliche rheologische Eigenschaften aufweisen, so dass sie koextrudiert werden können.

3. Mehrschichtiger optischer Film nach Anspruch 1,
   wobei das erste Material ein kristalliner Naphthalindicarbonsäurepolyester ist.

4. Mehrschichtiger optischer Film nach Anspruch 1,
   wobei die erste Materialschicht uniaxial doppelbrechend ist.

5. Mehrschichtiger optischer Film nach Anspruch 1,
   wobei die erste Materialschicht biaxial doppelbrechend ist.

**6.** Mehrschichtiger optischer Film nach Anspruch 1,
wobei der mehrschichtige optische Film ein reflektierender Polarisator ist.

**7.** Mehrschichtiger optischer Film nach Anspruch 1,
wobei der mehrschichtige optische Film ein Spiegel ist.

**Revendications**

**1.** Film optique polymère multicouche, comprenant :

une pluralité de couches alternées d'un premier et d'un deuxième matériau polymère utiles comme polariseur réfléchissant ou comme miroir, les couches de matériaux ayant des indices de réfraction nx, ny respectivement associés à des axes dans le plan x et y parallèles à une surface du film, les couches de matériaux ayant également des indices de réfraction nz associés à un axe z perpendiculaire au plan du film ;

dans lequel des couches voisines du premier et du deuxième matériau forment une interface, la couche du premier matériau étant biréfringente et ayant un indice de réfraction associé à au moins l'un des axes dans le plan qui est supérieur à celui de la couche du deuxième matériau ;
dans lequel l'indice de réfraction nz de la couche du premier matériau est inférieur à l'indice de réfraction nz de la couche du deuxième matériau.

**2.** Film optique multicouche selon la revendication 1,
dans lequel le premier et le deuxième matériau présentent des propriétés rhéologiques similaires de sorte qu'ils peuvent être coextrudés.

**3.** Film optique multicouche selon la revendication 1,
dans lequel le premier matériau est un polyester d'acide naphtalène-dicarboxylique cristallin.

**4.** Film optique multicouche selon la revendication 1,
dans lequel la couche du premier matériau présente une biréfringence uniaxiale.

**5.** Film optique multicouche selon la revendication 1,
dans lequel la couche du premier matériau présente une biréfringence biaxiale.

**6.** Film optique multicouche selon la revendication 1, le film optique multicouche étant un polariseur réfléchissant.

**7.** Film optique multicouche selon la revendication 1, le film optique multicouche étant un miroir.

| | |
|---|---|
| PEN n = 1.64 | ─12 |
| coPEN n = 1.64 | ─14 |
| PEN n = 1.64 | ─12 |
| coPEN n = 1.64 | ─14 |
| PEN n = 1.64 | ─12 |
| coPEN n = 1.64 | ─14 |
| PEN n = 1.64 | ─12 |
| coPEN n = 1.64 | ─14 |
| PEN n = 1.64 | ─12 |

10

*Fig. 1a*

| | |
|---|---|
| PEN n = 1.88 | ─12 |
| coPEN n = 1.64 | ─14 |
| PEN n = 1.88 | ─12 |
| coPEN n = 1.64 | ─14 |
| PEN n = 1.88 | ─12 |
| coPEN n = 1.64 | ─14 |
| PEN n = 1.88 | ─12 |
| coPEN n = 1.64 | ─14 |
| PEN n = 1.88 | ─12 |

10

*Fig. 1b*

## Fig. 2

INDEX OF REFRACTION

WAVELENGTH (nm)

## Fig. 3

TRANSMISSION

*Fig. 4*

*Fig. 5*

*Fig. 6*

Fig. 7

Fig. 8

*Fig. 9*

*Fig. 10*

Fig. 11

Fig. 12

**Fig. 13**

**Fig. 14**

INDEX

n1z

IN-PLANE
INDEX 1

ISOTROPIC
CASE

DECREASING
BREWSTER
ANGLE

IN-PLANE
INDEX 2

n2z

*Fig. 15*

INDEX

IN-PLANE
INDEX 1

n1z

IN-PLANE
INDEX 2

n2z

ISOTROPIC
CASE

INCREASING
BREWSTER
ANGLE

NO BREWSTER
ANGLE,
R INCREASES
WITH ANGLE

*Fig. 16*

**Fig. 17**

**Fig. 18**

*Fig. 19*

Fig. 20

Fig. 21

*Fig. 22*

Fig. 23

Fig. 24

*Fig. 25*

**Fig. 26**

**Fig. 27**

*Fig. 28*

*Fig. 29*

*Fig. 30*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3610729 A, Rogers
- US 4310584 A, Cooper
- US 5122905 A, Wheatley
- US 5122906 A, Wheatley
- US 5126880 A, Wheatley
- US 4525413 A, Rogers
- US 4756953 A, Utsumi
- EP 488544 A
- US 3565985 A
- US 3801429 A
- US 5094788 A
- US 5094793 A

### Non-patent literature cited in the description

- **ALFREY et al.** *Polymer Engineering And Science,* November 1969, vol. 9 (6), 400-404
- **RADFORD et al.** *Polymer Engineering And Science,* May 1973, vol. 13 (3), 216-221
- **M. F. WEBER.** Retroreflecting Sheet Polarizer. *SID conf. proceedings,* May 1992, 427
- **M. F. WEBER.** Retroreflecting Sheet Polarizer. *SID conf. proceedings,* 1993, 669
- **BABA et al.** *Optics Letters,* 15 April 1992, vol. 17 (8), 622-624
- **BOESE et al.** *J. Polym. Sci.,* 1992, vol. 30, 1321